# EUROPÄISCHE PATENTSCHRIFT

(11) **EP 2 693 866 B1**
(45) Veröffentlichungstag und Bekanntmachung des Hinweises auf die Patenterteilung: **30.03.2016**
(21) Anmeldenummer: 12715348.4
(22) Anmeldetag: 05.04.2012
(51) Int. Cl.: A01G 13/02

(54) **FUNKTIONALER FOLIENTUNNEL, INSBESONDERE SICH SELBST AUFRICHTENDE STRUKTUR UND VERFAHREN ZUR HERSTELLUNG**
AGRICULTURAL TUNNEL WITH SELF ERRECTING STRUCTURE AND METHOD OF PRODUCTION
TUNNEL AGRICOLE AVEC STRUCTURE AUTO ÉRECTILE ET PROCÉDÉ DE PRODUCTION

(30) Priorität: 08.04.2011 DE 102011001917
(43) Veröffentlichungstag der Anmeldung: 12.02.2014
(73) Patentinhaber: BAM Bundesanstalt für Materialforschung und -prüfung, 12205 Berlin (DE)
(72) Erfinder: PRETSCH, Thorsten, 12207 Berlin (DE); LINDEBACHER, Jasmin, 40627 Düsseldorf (DE); HÄTTIG, Jürgen, 51519 Odenthal (DE)
(74) Vertreter: Zimmermann & Partner Patentanwälte mbB
(86) Internationale Anmeldenummer: PCT/EP2012/056333
(87) Internationale Veröffentlichungsnummer: WO 2012/136794

(56) Entgegenhaltungen:
- WO-A1-2005/037035
- CN-Y- 201 290 277
- JP-A- H10 215 710
- US-A- 5 163 461
- US-A1- 2006 112 621
- US-B1- 6 224 610

## Beschreibung

Die vorliegende Erfindung betrifft Vorrichtungen, insbesondere Folientunnel und die Verwendung eines Formgedächtnispolymeren für eine selbstaufrichtende Stützstruktur derartiger Vorrichtungen oder Folientunnel.

Ein Folientunnel kann beispielsweise vor Niederschlägen oder Nachtfrösten schützen, oder er gewährleistet ein günstiges Mikroklima. Ebenso kann eine Vorrichtung der beschriebenen Art als Abschattung vor direkter Sonneneinstrahlung schützen.

Die Errichtung konventioneller Folientunnel erfordert einen hohen Arbeits- und Zeitaufwand. Beispielsweise wird für konventionelle Folien-Tunnel bzw. Folien-Gewächshäuser zunächst ein vollständiges Gerüst aus miteinander verbundenen Rundbögen aus Metall aufgestellt. Danach wird Plastikfolie über die Rundbogensegmente gezogen.

In US 5 163 461 A ist eine sich selbständig aufrichtende Rahmenstruktur für ein Schutzzelt umfassend Fiberglas beschrieben. US 6 224 610 B1 lehrt ein polymeres intravaskuläres Bereitstellungssystem umfassend Nitinol.

Weiterhin ist aus JPH10215710 ein Folientunnel mit einer Lüftungseinrichtung bekannt, welche mit einem Formgedächtnismaterial ausgestattet is. Diese Lüftungseinrichtung wird durch Einwirkung der Innentemperatur des Folientunnels bewegt.

Vor diesem Hintergrund wird eine Vorrichtung umfassend ein flächiges Material und zumindest ein Stützelement vorgeschlagen, das mit dem flächigen Material verbunden ist, wobei das zumindest eine Stützelement zumindest ein Formgedächtnispolymer derart aufweist, dass die Vorrichtung in einer ersten Konfiguration des zumindest einen Formgedächtnispolymers eine im Wesentlichen flache Form aufweist und in einer zweiten Konfiguration des Formgedächtnispolymers eine im Wesentlichen gewölbte Form aufweist.

Gemäß bevorzugten Ausführungsformen kann das Stützelement, das zumindest ein Formgedächtnispolymer (FGP) umfasst, vorab in einer geraden Form in eine Plastikfolie integriert werden oder kann an einer Plastikfolie befestigt sein.

Als Formgedächtnispolymere werden im allgemeinen Kunststoffe bezeichnet, die sich nach einer Umformung an ihre frühere äußere Form scheinbar "erinnern" können und insofern ein Formgedächtnis besitzen. Um die frühere Form abzurufen, muss das FGP einem Stimulus ausgesetzt werden. Dieser Stimulus kann beispielsweise in einer Wärmezufuhr bestehen, indem das betreffende FGP direkt oder indirekt erwärmt wird.

Eine direkte Erwärmung des FGP kann von außen durch heiße Luft, durch IR-Einstrahlung, beispielsweise durch Exposition mit Sonnenlicht oder den Luftstrom eines Heißlüfters oder durch unmittelbaren Kontakt mit einem Wärmespeichermedium, etwa einem zuvor aufgeheizten Fluid erfolgen. Gemäß einer Ausführungsform erfolgt die Wärmezufuhr durch warmes Wasser.

Gemäß anderen Ausführungsformen erfolgt die Wärmezufuhr indirekt, indem ein im FGP dauerhaft eingebettetes Hilfsmaterial in Wechselwirkung mit einem externen elektromagnetischen Feld die FGP-Matrix erwärmt. Derartige Hilfsmaterialien können beispielsweise eine Graphenstruktur aufweisen, wie sie beispielsweise im Graphit, in Kohlenstoffnanoröhrchen, Graphen-Flocken oder expandiertem Graphit vorliegt. Ebenso können andere Partikel mit einer nanoskaligen Dimension als Hilfsmaterialien verwendet werden.

Ein Vorteil der dem FGP zugesetzten Hilfsmaterialien besteht darin, dass sie durch ihre Größe und Materialeigenschaften, die Energie eingestrahlter elektromagnetischer Felder absorbieren, in Wärme umwandeln und an die sie umgebende Matrix des Formgedächtnispolymers abgeben. Damit kann eine effektive Erwärmung und schnelle Formveränderung eines aus FGP bestehenden Stützelements berührungslos erreicht werden.

Die direkt oder indirekt bewirkte Erwärmung des Formgedächtnispolymeren induziert berührungslos die Rückstellung der Gestalt des Stützelements aus einer temporären in eine ursprüngliche, primäre Ausgangsform. Diese Ausgangsform ist vorteilhafterweise diejenige, die eine im Wesentlichen gewölbte Form des am Stützelement befestigten flächigen Materials gewährleistet. Handelt es sich beim flächigen Material um eine Folie, so führt die direkte oder indirekte Wärmezufuhr beispielsweise zur Wölbung der Folie

Sind mehrere Stützelemente in geeigneter Weise am flächigen Material befestigt und weisen sie eine entsprechende Orientierung auf, so lässt sich durch die Rückstellung des Formgedächtnispolymers der Stützelemente eine dreidimensional gewölbte Fläche nach Art der Wandung bzw. Oberfläche einer Haube, eines Gewölbes, eines Tunnels oder eines Kanals erzeugen. Ein Folientunnel stellt eine bevorzugte Ausführungsform der hier beschriebenen Verwendung von FGP in der beschriebenen Vorrichtung dar.

Andere Ausführungsformen der Stützelemente umfassen das Aufrichten oder Errichten einer im Wesentlichen planaren Fläche, einer Wand, eines Zaunes oder einer andersartigen Barriere, Umzäunung oder Abgrenzung. Die Stützelemente dieser Ausführungsformen nehmen mit der Rückstellung der FGP-Komponente beispielsweise eine abgewinkelte Form an. Die Art der Befestigung des flächigen Materials zu einem oder mehreren Stützelementen bewirkt eine insgesamt aufrechte Struktur dieser Ausführungsform der Vorrichtung.

Vorteilhafterweise liegt das flächige Material als Folie oder Folienbahn vor, wie z.B. im Agrarbereich verwendete Folien, z.B. Agrarfolien. Anstelle einer Folie oder einer Folienbahn kann für andere Ausführungsformen ebenso ein anderes im Wesentlichen planares Material, beispielsweise ein Textil, ein Geflecht, Netz, Gaze oder ein nichtgewebtes Material, beispielsweise ein Vlies, Papier oder eine andere, durchbrochene, geschlitzte, gelochte oder anderweitig, zumindest partiell perforierte, oder durchgehend geschlossene, flächige Struktur Verwendung finden.

Die Folie oder ein anderes im Wesentlichen flächiges Material der Vorrichtung kann ebenso als gleichseitige oder annähernd gleichseitige Fläche oder als eine im Wesentlichen kreisförmige Fläche vorliegen. Die entsprechend präparierte und mit Stützelementen in einer geraden Konfiguration ausgestattete Folie oder das flächige Material mit zumindest einem Stützelement wird ausgelegt, ausgebreitet, ausgerollt, ausgespannt und/oder befestigt auf der Fläche, die dem Folientunnel, bzw. der Vorrichtung zugedacht ist.

Durch eine an die spezifischen Eigenschaften der Formgedächtnispolymer-Komponente des Stützelements angepasste Wärmezufuhr wird eine Konfigurationsänderung des Stützelements bewirkt. Durch die Art der Befestigung von einem oder mehreren gleichen oder ähnlichen Stützelementen an der Folie bzw. am flächigen Material, nimmt die Vorrichtung bei Erwärmung der FGP-Komponente die beabsichtigte gewölbte oder aufrechte Form an.

Unter spezifischen Eigenschaften einer FGP-Komponente werden beispielsweise dessen Schmelztemperatur, sowie dessen Glasübergangstemperatur (T_{g}), Kristallisationstemperatur der Weichsegmente eines Blockcopolymeren und daraus resultierende Formgedächtniseigenschaften, wie das Maß oder der Grad der erreichten Rückstellung (recovery), seine Rückstellrate, seine Rückstellgeschwindigkeit und seine Rückstelltemperatur oder Übergangstemperatur (Tₜᵣₐₙₛ) verstanden. Weitere Parameter der FGP-Komponente der Vorrichtung sind beispielsweise sein Elastizitätsmodul, seine Härte, seine Scherfestigkeit. Diese Werte ergeben sich beispielsweise aus der chemischen Natur des Formgedächtnispolymers oder des Formgedächtnispolymer-Komposits und sind dem Fachmann bekannt.

Im Gartenbaubereich werden Folientunnel als kostengünstige Alternative zu Gewächshäusern verwendet. Hier genutzte Folientunnel sind insbesondere lichtdurchlässige Konstruktionen, die das geschützte und kontrollierte Kultivieren von Pflanzen ermöglichen. Pflanzen-Schutz-Überdachungen wie diese Folientunnel werden üblicherweise aus Plastikfolien gefertigt. Dies stellt einerseits sicher, dass die Temperatur in dem überdeckten Bereich ausreichend hoch ist, andererseits schützt die Plastikfolie vor Niederschlägen.

Die der beschriebenen Vorrichtung zu Grunde liegende Idee, ein später die gewünschte Bogenform des Stützelementes annehmendes Formgedächtnispolymer (FGP) vorab in einer geraden Form in die Plastikfolie zu integrieren, lässt sich auch auf andere Anwendungen übertragen, in denen ein flächiges Material von Bügeln, Stützen, Masten, Stangen oder anderen Stützelementen getragen oder in einem aufgespannten Zustand gehalten wird.

Vorteile der vorgeschlagenen Ausführung lasttragender Stützelemente, beispielsweise in Form von Stangen und Rohren aus FGP bestehen darin, dass die Form (einschließlich ihres Querschnitts) den jeweiligen anwendungsrelevanten Erfordernissen angepasst werden kann. Diese Anpassung betrifft beispielsweise die zum Aufrichten bzw. Entfalten der Gesamtkonstruktion erforderliche Kraft, thermo-mechanische Eigenschaften, die Widerstandsfähigkeit gegenüber Wind in Querrichtung, etc.

Beispielsweise können lasttragende Stützelemente sogenannter Pop-Up-Zelte (Wurfzelte) in Form von Stangen oder Rohren aus FGP hinsichtlich ihrer Dimension und Form (einschließlich ihres Querschnitts) den jeweils relevanten Erfordernissen angepasst werden. Bekannte Wurfzelte können nur bis zu einem begrenzten Gewicht eingesetzt (geworfen) werden, da sie schnell unhandlich werden. Außerdem ist bekannt, dass billige Varianten von Wurfzelten bereits beim Aufbau durch Stangenbruch kaputt gehen können. Hinzu kommt, dass die Reparatur von Pop-Up-Zelten mit gebrochenen Stangen sehr aufwendig ist.

Nachfolgend soll das vorgeschlagene Prinzip an Hand von Figuren beschrieben und erläutert werden. Dabei zeigt:
- Fig. 1: Grundformen der Stützelemente (permanente Konfiguration des FGP);
- Fig. 2: Beispiele von Querschnittsformen stangenförmiger Stützelemente;
- Fig. 3: Beispiele von Querschnittsformen rohrartiger Stützelemente;
- Fig. 4: Beispiele der Strukturierung der Außenkontur von Stützelementen;
- Fig. 5: Fraktale Außenkontur von Stützelementen nach Art der Koch'schen Schneeflocke;
- Fig. 6: Verbindung benachbarter Stützelemente durch Abstandshalter;
- Fig. 7: Programmierung von Stützelementen gemäß "Flügeltüren"-Konzept;
- Fig. 8: Programmierung von Stützelementen (Formfixierung) unter Auflast;
- Fig. 9: Richtung und Ort gezielter Krafteinwirkung auf Stützelemente zur Formfixierung (Programmierung) ;
- Fig. 10: Beispiel der Befestigung formfixierter Stützelemente in Folientaschen und Lagerungsform Rolle;
- Fig. 11: Ausgelegte Folie am Aufstellort vor und nach Auslösen des FGE;
- Fig. 12: Querschnitt durch Stützelement in korrespondierender Folientasche;
- Fig. 13: Zeitabhängiges Rückstellverhalten einer Materialprobe eines FGP aus Poly(ester urethan);

Die lasttragenden Stützelemente, z.B. Stangen oder Rohre eines Folientunnels bzw. einer andersartigen sich selbst aufrichtenden Struktur, werden aus einem FGP gefertigt. Das FGP wird dann in eine temporäre Form überführt, so dass es in vorgefertigte Taschen einer Plastikfolie oder eines entsprechenden anderen planaren Materials eingesetzt werden kann. Durch Auslösen des Formgedächtniseffekts richtet sich dann der Folientunnel bzw. die Vorrichtung von selbst auf. Nach dem Einsatz werden die Stangen/Rohre aus FGP durch eine Formfixierungsprozedur wieder in die lineare (temporäre) Form überführt und stehen für den erneuten Einsatz bereit.

Mit dem Begriff "Stange" wird im Folgenden ein längliches Bauteil aus FGP beschrieben, das keinen Hohlraum aufweist. Der Begriff "Rohr" wird so definiert, dass das längliche Bauteil aus FGP mindestens einen Hohlraum besitzt; es kann jedoch auch eine beliebig große Zahl an Hohlräumen oder Kanälen mit demselben oder unterschiedlichen Durchmessern bzw. Formen in dem Rohr vorliegen. Es sei angemerkt, dass die Form der Hohlräume in einem Rohr vorzugsweise rund oder ellipsenförmig ist.

Ein besonders geeignetes Herstellungsverfahren für die hier beschriebenen stangen- oder rohrförmigen Stützelemente ist die Spritzguss-Technik. Ebenso können entsprechend adaptierte Profilextrusionsverfahren verwendet werden.

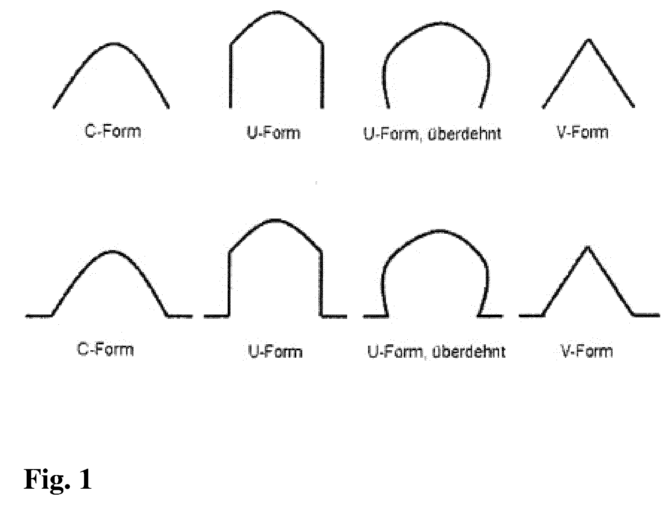

Nach einer oder mehreren Ausführungsformen werden die Stützelemente, z.B. Stangen bzw. Rohre aus FGP in den Grundformen "C", "U", "U (überdehnt)" oder "V" gefertigt (vgl. Fig. 1, obere Reihe). Dabei erinnert die C-Form an die klassische Form eines Rundbogens und die U-Form an die Form des Giebels eines Foliengewächshauses. Die Darstellung der Formen erhebt keinen Anspruch auf Vollständigkeit. Um später eine hinreichende Befestigung mit dem Erdreich sicherzustellen, können auch Stangen/Rohre aus FGP mit abgewinkelten Enden verwendet werden (vgl. Fig. 1, untere Reihe).

Ein oder mehrere Stützelemente werden in ihrer temporären, geraden / gestreckten Form auf einer Seite des flächigen Materials, beispielsweise einer Folie befestigt. Nach einer oder mehreren bevorzugten Ausführungsformen wird das flächige Material (z.B. Folie) mit den einseitig daran befestigten Stützelementen so ausgelegt bzw. ausgebreitet, dass die Stützelemente vom flächigen Material (z.B. der Folie) bedeckt sind.

Gemäß einer Ausführungsform erwärmt sich im Verlaufe eines gewissen Zeitraumes unter dem Einfluss der Sonneneinstrahlung und der Außentemperatur die Luft unter Folie und das FGP des Stützelements. Diese Erwärmung löst den für Formgedächtnispolymere bekannten Formgedächtnis-Effekt (FGE) des Formgedächtnispolymers der Stützelemente aus. Das führt zum selbständigen Aufrichten der Stützelemente beziehungsweise zur Entfaltung der Vorrichtung, beispielsweise eines Folientunnels.

Gemäß einer anderen Ausführungsform wird durch eine extern gesteuerte und damit voreingestellte und dosierte Wärmezufuhr an die Stützelemente der Formgedächtnis-Effekt des FGP zum gewünschten Zeitpunkt ausgelöst. Das führt zum selbständigen Aufrichten der Stützelemente beziehungsweise zur Entfaltung der Vorrichtung, beispielsweise eines Folientunnels.

Nachstehend werden zwei Typen von Führungslagern des Stützelements beschrieben. Typus 1 hat eine Nut, Typus 2 weist einen Grat, bzw. eine Auswölbung auf. Unter dem Begriff "Nut" wird eine längliche oberflächliche Vertiefung verstanden, die von dem einen zum anderen Ende der Stange/des Rohres reicht. Unter dem Begriff "Grat" wird eine entsprechende längliche Auswölbung verstanden, die abschnittsweise in regelmäßigen oder unregelmäßigen Abständen unterbrochen sein kann. Nut und Grat dienen als Führungslager beim späteren Einfügen der Stange/des Rohres aus FGP in eine nachfolgend beschriebene Folientasche. Die Nut und der Grat lassen nur eine Orientierung des aus FGP bestehenden Stützelements in der Folientasche zu. Die Austauschbarkeit der Begriffe "Nut" und "Grat" gilt für alle nachfolgend beschriebenen Möglichkeiten der Gestaltung des Querschnitts bzw. der Oberflächenstrukturierung für Stangen/Rohre aus FGP.

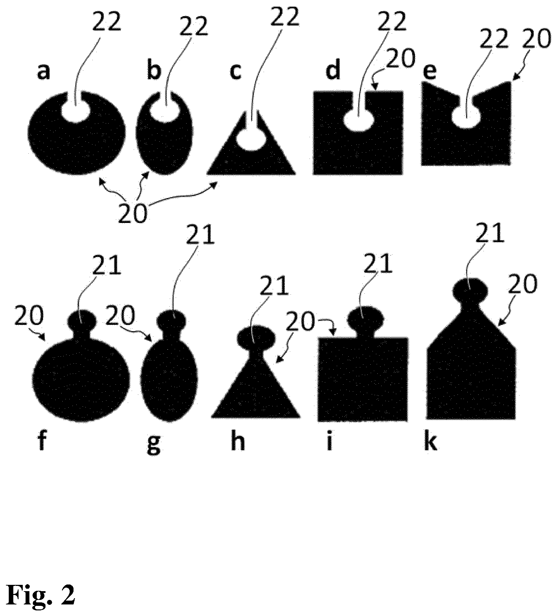

Fig. 2 zeigt Querschnittsformen von Stangen (20) aus FGP. Der Stangenquerschnitt ist typischerweise kreisförmig (vgl. Fign. 2a, 2f). Weiterhin kann bei einer prismenförmigen Geometrie der Stange (20) die geometrische Form ihres Querschnitts oval (Fign. 2b, 2g), dreieckig (Fign. 2c, 2h), viereckig (umfassend die Formen Quadrat, Rhombus, Rechteck, Drachenviereck, Parallelogramm, Trapez, Tangentenviereck, Sehnenviereck, konvexes und konkaves Viereck und konkaves Drachenviereck; vgl. Fign. 2d, 2i) oder fünfeckig (Fign. 2e, 2k) sein. Ebenso kann der Querschnitt die Form geometrischer Objekte mit mehr als 5 Ecken haben. Ebenso kann der Querschnitt eine fünfstern- (pentagramm-) oder sechsstern- (hexagramm-) förmige Geometrie haben. Jede Ecke der geometrischen Figuren in Fig. 2 kann auch abgerundet sein.

Die Querschnittsformen von Stangen (20) aus FGP entsprechend den Grundformen Kreis (a), Ellipse (b), Dreieck (c), Quadrat/Rechteck (d) und Fünfeck (e) sind beispielhaft in Fig. 2 gezeigt. Die in der oberen Reihe dargestellten Figuren 2a bis 2e weisen eine Nut (22) auf, die Figuren 2f bis 2k haben einen Grat (21). Für die Dreiecksform (Fig.2h) und die Fünfecksform (Fig. 2k) ist kein gesonderter Grat notwendig (im Falle des Dreiecks gilt dies, solange es sich um kein gleichseitiges Dreieck handelt).

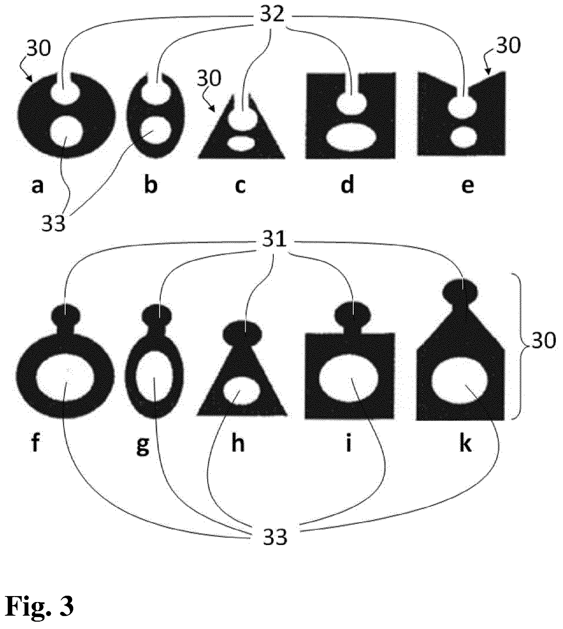

Ebenso können statt Stangen (20) auch Rohre (30) aus FGP verwendet werden. Eine Auswahl möglicher Querschnittsformen von Rohren (30) aus FGP ist in Fig. 3 dargestellt. Auch hier weisen die Stützelemente zumindest abschnittsweise einen Grat (31) oder eine Nut (32) auf.

Die für den Grat (21, 31) und die Nut (22, 32)angegebenen Formen sind hier beispielhaft rund gewählt. Nach anderen Ausführungsformen können die Querschnitte der Nuten (22, 32) bzw. der Grate (21, 31) auch quadratische oder mehreckige Flächen sein.

Fig. 3 zeigt Querschnittsformen von Rohren (30) aus FGP analog zu den in Fig. 2 dargestellten Grundformen a bis k. Die Durchmesser der Öffnungen (33) sind frei wählbar. Darüber hinaus können die Rohre (30) so geformt sein, dass sie im Querschnitt mehr als einen Hohlraum aufweisen. Nach einer oder mehreren Ausführungsformen wird eine Stange / Rohr (30) quasi von mehreren geschlossenen Luftkammern oder von durchgehenden, an ihren Enden offenen Kanälen durchzogen. Alle in den Figuren dargestellten und hier beschriebenen geometrischen Objekte können sowohl mit, als auch ohne Führungslager (Nut/Grat) ausgeführt sein. Die Strukturierung der Führungslager kann beispielsweise wie in den Figuren dargestellt erfolgen. Darüber hinaus, können jegliche anderen Strukturierungsmöglichkeiten für die Führungslager gewählt werden.

Beispielsweise können runde Formen durch eckige ersetzt werden. Rohre haben gegenüber Stangen allgemein den Vorteil, dass sich bei ihnen schneller der FGE auslösen lässt, wenn eine Erwärmung vorzugsweise von innen und gegebenenfalls zeitgleich von außen erfolgt. Nach einer bevorzugten Ausführungsform erfolgt die Erwärmung des Stützelements auf eine Temperatur oberhalb der Schalttemperatur seines Formgedächtnispolymers. Rohre aus FGP können an ihren Enden einen geeigneten Anschluss, beispielsweise einen Fluidik-Anschluss, ein Adapterstück, z.B. ein Gewinde oder sonstige Anschlüsse aufweisen. Nach einer bevorzugten Ausführungsform weist zumindest ein Stützelement einen Kanal auf, der an seinen jeweiligen Enden in einen Anschluss mündet, der geeignet ist für eine Schlauchverbindung, Steck-, Schraub-, Klemm-, Rast-, Spann- oder Press- Verbindung. Ein Vorteil dieser Ausführungsform ist, dass beispielsweise die im Inneren mehrerer Stützelemente verlaufenden Kanäle durch Schläuche miteinander verbunden werden können. Zu einem gewünschten Zeitpunkt kann der so gebildete geschlossene Kanal dann von einem zuvor geheizten und/oder entsprechend temperierten Fluid durchströmt werden.

Nach einer beispielhaften Ausführungsform kann zumindest ein Kanal bzw. Hohlraum (33) des Stützelementes mit einem Wärmespeichermedium gefüllt sein. Ebenso können Kanäle bzw. Hohlräume im Stützelement mit einem elektrisch leitfähigen Material eines bestimmten ohmschen Widerstandes gefüllt sein, dass sich bei Stromfluß erwärmt und die Wärme an das umgebende FGP abgibt.

Im Fall der Verwendung dieser Art von Widerstandsheizung weisen die jeweiligen Enden des durchgehenden Kanals (33) einen Anschluss auf, der den zuverlässigen Kontakt zu einer Stromquelle gewährleistet. Der Anschluss ist so gestaltet, dass die elektrische Isolation gegenüber der Umgebung, auch unter den Bedingungen von Kondenswasser, Niederschlägen, zusätzlicher Bewässerung oder Beregnung gewährleistet ist.

Ebenso können Adapterstücke oder Verbindungselemente an den Öffnungen von ansonsten geschlossenen Folientaschen angebracht sein. Derartige Verbindungselemente bieten den Vorteil, die Folientasche als Ummantelung des ein FGP aufweisenden Stützelements nutzen zu können. Eine mit Adapterstücken oder Verbindungselementen versehene Folientasche kann zur Aufstellung des Folientunnels genutzt werden, indem ein die Folientasche durchströmendes, entsprechend temperiertes Fluid die Rückstellung des in der Folientasche angeordneten Stützelements in dessen gekrümmte Form bewirkt.

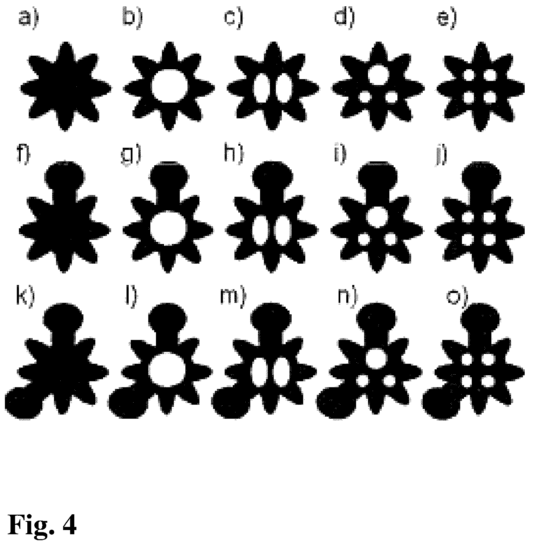

Gemäß weiteren Ausführungsformen wird die Oberfläche bzw. der Querschnitt der Stützelemente, bzw. der Stangen/Rohre aus FGP so gestaltet, dass sie eine große äußere Oberfläche aufweisen. Daraus ergibt sich der Vorteil besserer Möglichkeiten der Temperierung. Das wirkt sich beispielsweise positiv auf die Geschwindigkeit beim Rückverformen (Rückstellen) von Formgedächtnispolymeren mit temporärer Form in die permanente Form aus. Eine mögliche Querschnittsstrukturierung erinnert an eine Fächerrosette (vgl. Fig. 4). Fig. 4 zeigt Querschnittsformen von Stangen/Rohren aus FGP. Ohne Luftkammer (a), mit einer Luftkammer (b, g), mit zwei Luftkammern (c, h), mit drei Luftkammern (d, i) und mit vier Luftkammern (e, j). Die Querschnitte der Figuren 4f bis j haben jeweils ein Führungslager, die der Figuren 4k bis o derer zwei.

Wenn erforderlich, lassen sich auch hier geschlossene Hohlräume, beispielsweise Luftkammern, (Fign. 4b bis e) effektiv nutzen. Ebenso kann ein Führungsgrat (Fign. 4f bis j) integriert werden. Die Anzahl der Ausstülpungen in der Querschnittsgeometrie des Typs einer Fächerrosette kann zwischen 3 und einer beliebig großen Zahl gewählt sein, insbesondere zwischen 3 und 20. Die Zahl der Luftkammern kann zwischen Null und 2000, insbesondere zwischen 1 und 12, gewählt sein. Ebenso lässt sich die Zahl der Führungslager bzw. Grate variieren, z.B. auf zwei erhöhen (vgl. Fign. 4k bis o).

Nach einer besonders bevorzugten Ausführungsform weist das zumindest eine Stützelement, zumindest abschnittsweise, einen Querschnitt mit einer zerklüfteten Kontur und/oder eine zerklüftete Oberfläche derart auf, sodass der Wärmeaustausch mit der Umgebung erleichtert wird. Ebenso kann ein Stützelement zumindest abschnittsweise eine oder mehrere in Längsrichtung hintereinander liegende Ausstülpungen oder Erhebungen aufweisen. Diesen längs des Stützelements hintereinander liegenden Ausstülpungen oder Erhebungen können im Wesentlichen korrespondierend geformte Einstülpungen, Vertiefungen oder Gräben im Wesentlichen diametral gegenüber liegen.

Das bietet den Vorteil, dass sich mehrere Stützelemente längsseitig miteinander verbinden lassen. Damit wird einerseits die thermische Programmierung einer Vielzahl von Stützelementen erleichtert, solange sie noch nicht am flächigen Material/der Folie befestigt sind. Andererseits können mehrere, bereits an dem flächigen Material/der Folie) geeignet befestigte Stützelemente miteinander längsseitig verbunden werden, was neben der, nachfolgend noch erläuterten, aufgerollten bzw. nicht entfalteten Form des Folientunnels mit geraden/gestreckten Stützelementen in der temporären Form der FGP, eine weitere Form der platzsparenden Faltung des Folientunnels gestattet.

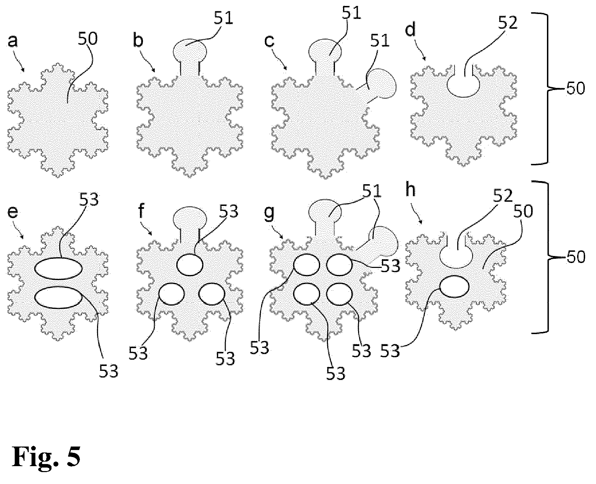

Zur Verbesserung des Wärmeaustauschs, aber auch zur Verbesserung der mechanischen Stabilität kann die äußere Kontur des Querschnitts des Stützelements einer fraktalen Struktur ähneln oder eine solche aufweisen. Damit wird eine vorteilhaft große Oberfläche des Querschnitts der Stützelemente erzielt, die beispielsweise einen verbesserten Wärmeaustausch mit der Umgebungsluft gewährleistet. Beispiele für vorteilhafte Geometrien sind Querschnittsgeometrien nach Art der Koch'schen Schneeflocke (Fig. 5a). Auch hier empfiehlt sich die Ausstattung der Oberfläche der Stützelements mit einem, zumindest abschnittsweise angeordneten zusätzlichen Grat 51 (vgl. Fign. 5b und f) oder mit zwei Graten 51(Fign. 5c und g), mit einer Nut 52 (Fign. 5d und h) sowie mit Luftkammern 53 (Fign. 5 e bis h) oder Kanälen 53. Ebenso kann der Stangen-/Rohrquerschnitt dem Querschnitt eines Menger-Schwamms entsprechen.

Nach erfolgter Herstellung liegt das FGP, bzw. das Stützelement in seiner permanenten Form vor. Nachfolgend werden verschiedene Konzepte zur Fixierung der Stützelemente, z.B. Stangen/Rohre aus FGP in ihrer temporären Form vorgestellt.

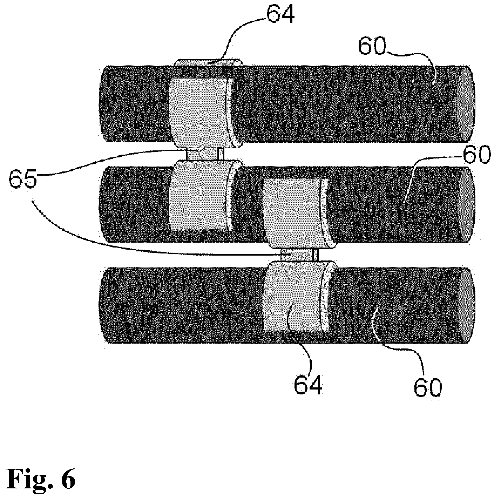

Konzept 1: Als besonders nützlich hat sich das "Flügeltüren"-Konzept erwiesen. Die einzelnen Stangen/Rohre aus FGP werden so miteinander verbunden, dass sie sich übereinander stapeln lassen. Das Verbinden benachbarter Stangen/Rohre (60) aus FGP kann beispielsweise mit Hilfe von Abstandshaltern (64, 65) erfolgen (vgl. Fig. 6). Fig. 6 zeigt Abstandshalter (64, 65) als Verbindungselemente für Stützelemente (60) in Form von Stangen bzw. Rohren aus FGP.

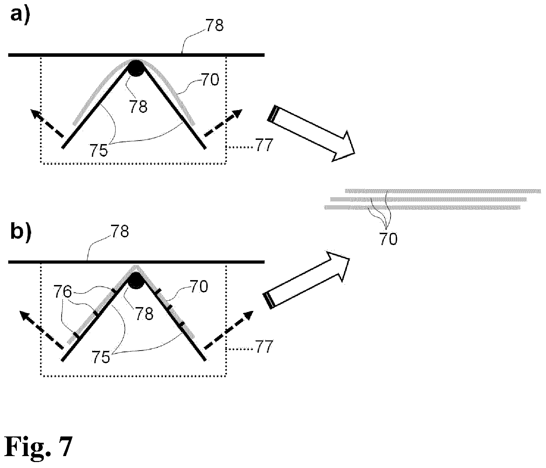

Ebenso ist es möglich, die einzelnen Stützelemente bzw. Stangen/Rohre (60) aus FGP direkt in Einspannvorrichtungen (76), die sich an einer Flügeltür (75) befinden, einzusetzen (Fig. 7). Als hilfreich erweisen sich hier der Einsatz der Nut bzw. des Grates in den Stangen/Rohren aus FGP bzw. der Einsatz von Befestigungsclips (64). Im darauffolgenden Schritt erwärmt man das FGP auf eine Temperatur T, wobei T >Tₜᵣₐₙₛ und bringt über zwei Flügeltüren (75) eine Kraft auf, mit der man die Stangen/Rohre aus FGP an eine hinter der Flügeltür befindliche Wand (78) drückt (vgl. Fig. 7). Diese Umformung vollzieht sich bevorzugt in einem beheizten Bereich (77), der beispielsweise durch einen Heißluftstrom erzeugt wird oder einen solchen darstellt.

Ein bevorzugtes Verfahren zur wärmeinduzierten Umformung zumindest eines Stützelements der beschriebenen Vorrichtung aus dessen erster Form, die der permanenten Konfiguration des Formgedächtnispolymeren entspricht, in dessen zweite Form, die der temporären Konfiguration des Formgedächtnispolymeren entspricht, oder umgekehrt - aus dessen zweiter in dessen erste Form - umfasst die nachfolgend benannten Schritte:
(a) Anordnen einer Vielzahl von Stützelementen (20, 30, 50, 60, 70, 80, 100) als Schicht oder als Stapel oder als Schichtstapel übereinander und/oder nebeneinander angeordneter oder lösbar miteinander verbundener Stützelemente (einer gegebenen Form an einer ersten Fläche, wobei die erste Fläche zumindest zwei zueinander schwenkbare Teilflächen aufweist, deren mittlere Flächennormalen miteinander einen ersten Winkel bilden oder parallel zueinander verlaufen;
(b) Anheben der Temperatur des Formgedächtnispolymers über dessen Glasübergangstemperatur oder dessen Erweichungstemperatur, entweder indirekt durch Beheizen zumindest einer der Teilflächen, oder durch unmittelbares Erwärmen der Vielzahl von Stützelementen (20, 30, 50, 60, 70, 80, 100);
(c) Schwenken zumindest einer der beiden Teilflächen in Bezug zur anderen Teilfläche derart, dass die mittleren Flächennormalen der Teilflächen, anders als zuvor, nun zueinander parallel verlaufen oder miteinander einen zweiten Winkel bilden, der von jenem des vorausgehenden Verfahrensschrittes (a) abweicht;
(d) Absenken der Temperatur des Formgedächtnispolymers unter dessen Glasübergangstemperatur oder dessen Erweichungstemperatur, entweder indirekt durch Abkühlen zumindest einer der Teilflächen oder durch den Kontakt der Vielzahl von Stützelementen mit einem Kühlmittel oder einer kühlen oder gekühlten zweiten Fläche oder Wand (78);
(e) Entnahme der nun umgeformten Stützelemente (20, 30, 50, 60, 70, 80, 100) aus der Schicht oder dem Stapel.

Fig. 7 illustriert das Flügeltüren-Konzept zur Überführung ("thermischen Programmierung") der Stangen/Rohre 70 aus FGP in ihre temporäre Form. Die "Flügeltür" wird durch zwei an einem Scharnier oder Lager (78) zueinander schwenkbare Flügel 75 gebildet. Das Konzept ist beispielhaft für einen Stapel mehrerer Stützelemente, z.B. Stangen/Rohren aus FGP in der C-Form dargestellt (vgl. Aufsicht a in Figur 7). Ebenso können Flügeltüren mit darauf montierten Einspannvorrichtungen (76) für Zwecke der Programmierung der Form des FGP eingesetzt werden (vgl. Aufsicht b in Figur 7).

Die Flügeltüren werden in ihrer neuen, geschlossenen Form justiert und die Umgebungstemperatur wird auf die Formfixierungstemperatur des Formgedächtnispolymers abgesenkt. Dass kann ggfs. auch schrittweise, z.B. über Nacht erfolgen. Sind die Stangen/Rohre aus FGP in ihrer neuen, geraden Form fixiert, können die Flügeltüren geöffnet und die Abstandshalter (65) zwischen den Stangen/Rohren aus FGP entfernt bzw. aus den Einspannvorrichtungen (76) der Flügeltür entnommen werden.

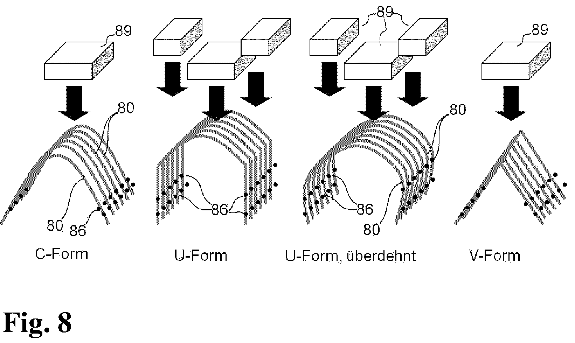

Konzept 2: Um die C-, U-, überdehnte U- oder V-förmigen Stangen/Rohre aus FGP in eine gerade Form zu überführen, werden die Stützelemente längsseits miteinander verbunden, z.B. so wie in Fig. 6 dargestellt. Dann wird das FGP auf eine Temperatur T von T>Tₜᵣₐₙₛ erwärmt, mit einer Last beaufschlagt (Fig. 8) und diese Auflast solange aufrechterhalten, bis die Stangen/Rohre aus FGP in der neuen, geraden Form durch Abkühlen unter die Formfixierungstemperatur (Glasübergangs- oder Weichsegmentkristallisationstemperatur) des Formgedächtnispolymers fixiert sind.

Fig. 8 zeigt die Formfixierung unter Auflast zur Überführung der Stangen/Rohre (80) aus FGP in die gerade (temporäre) Form. Die Verbindungselemente (86) für einander benachbarte Stangen/Rohre aus FGP sind schwarz gepunktet angedeutet. Die Auflast kann beispielsweise auch von einer oder mehreren hinreichend großen und schweren Platten (89), beispielsweise aus Metall, herrühren. Als besonders nützlich erweist sich, wenn man die Auflast über längere Zeit (mehrere Stunden) auf die Stangen/Rohre aus FGP einwirken lässt. Im Freien lassen sich über Nacht kältere Temperaturen geschickt ausnutzen, um die temporäre Form vollständig zu fixieren. Das FGP bleibt so lange in der neuen, temporären Form, bis man den FGE durch Erwärmen auf T>Tₜᵣₐₙₛ des Formgedächtnispolymers auslöst.

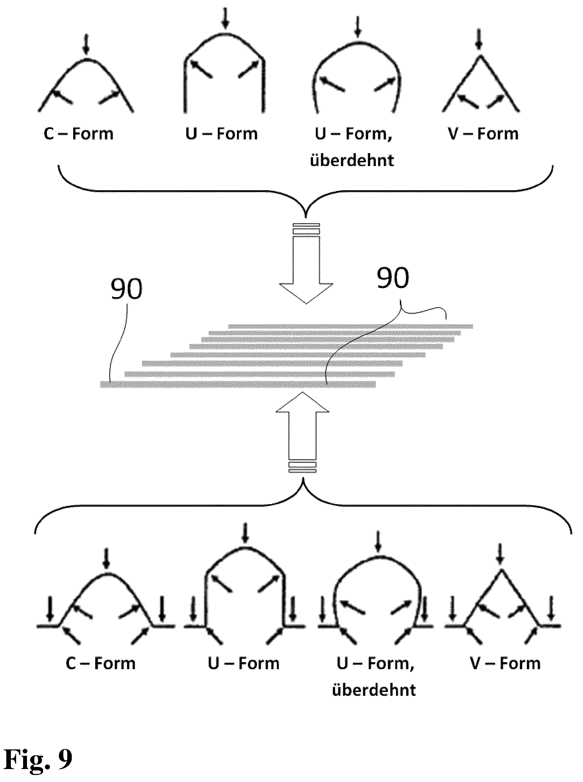

Ganz unabhängig davon, welches der vorgestellten Konzepte zur Formfixierung gewählt wird, zeigt Fig. 9, an welchen Stellen der Stangen/Rohre aus FGP Kräfte zur Formänderung vorzugsweise aufgebracht werden können. Die schematisch dargestellte Belastung der Stützelemente der permanenten Form (C-Form, U-Form, U-Form überdehnt, V-Form) führt, unabhängig davon, ob abgewinkelte Endstücke vorliegen (vgl. Fig. 9, untere Reihe) zur Verformung der Stangen/Rohre in eine gerade Form (vgl. Fig. 9, 90). Die hier beschriebene Formfixierung des FGP in dessen temporärer Konfiguration wird auch als "Programmierung" oder "Programmierungs-Schritt" bezeichnet.

Fig. 9 illustriert den gezielter Einsatz von Kräften zum Verformen von Stangen/Rohren aus FGP, die eine C-, eine U- (ggfs. eine überdehnte U-Form) oder eine V-Form aufweisen. In Form von Pfeilen ist dargestellt, an welchen Stellen Kräfte zur Verformung ansetzen können. Infolge der Programmierung wird eine gerade Stange/ein gerades Rohrs (90) aus FGP (mittig dargestellt) erhalten.

Bei der Programmierung ist darauf zu achten, dass man bei einer eventuell vorhandenen Nut, bzw. einem Grat oder mehrerer Führungslager diese nicht verformt, da sonst die FGP-Stangen nicht entsprechend der Vorgabe in die Folientaschen eingeführt werden können. In solchen Fällen soll die Kraft möglichst nicht unmittelbar auf eine Nut bzw. einen Grat aufgebracht werden. Deshalb kann die Strukturierungsform eines Grates an Stellen unterbrochen werden, wo Kräfte zur Programmierung aufgebracht werden (vgl. Pfeile in Fig. 9).

Alternativ zur Programmierung gemäß Konzept 1 und 2 kann das Verformen des Formgedächtnispolymers bei T<Tₜᵣₐₙₛ (ggfs. bei 23°C) erfolgen. Um eine gute Fixierung der temporären Form des Stützelements bzw. einer Stange oder eines Rohres aus FGP sicherzustellen, wird die Umgebungstemperatur nach dem Verformen auf eine Temperatur, die unterhalb der Formfixierungstemperatur liegt, abgekühlt. Auch in diesem Fall bewirkt das Abkühlen überwiegend das Fixieren bzw. Einfrieren der während des Verformens aufgebrachten Spannung. Abschließend wird das FGP auf die Umgebungstemperatur (T < Tₜᵣₐₙₛ) erwärmt. Es bleibt dann so lange in der neuen, temporären Form, bis der FGE auslöst wird.

Bei Formgedächtnispolymeren, die über unzureichende Formgedächtnis-Eigenschaften im ersten thermomechanischen Zyklus (umfassend eine Programmierung und eine Formrückstellung) verfügen, kann das einmalige Auslösen des Formgedächtnis-Effekts und das erneute Programmieren des Formgedächtnispolymeren zu einer signifikanten Verbesserung der Formgedächtnis-Eigenschaften führen. In Fällen, wo sich die Formgedächtnis-Eigenschaften auch nach dem zweiten Zyklus noch ändern, macht auch das Durchlaufen mehrerer thermo-mechanischer Zyklen Sinn. Im Zuge des Optimierens der Materialfunktionalität kann die permanente Form vorab so gewählt werden, dass bewusst Abweichungen von den idealen Formen C, U, U überdehnt, V eingegangen werden, um später eine gewünschte permanente Form nach einer Formrückstellung zu erhalten.

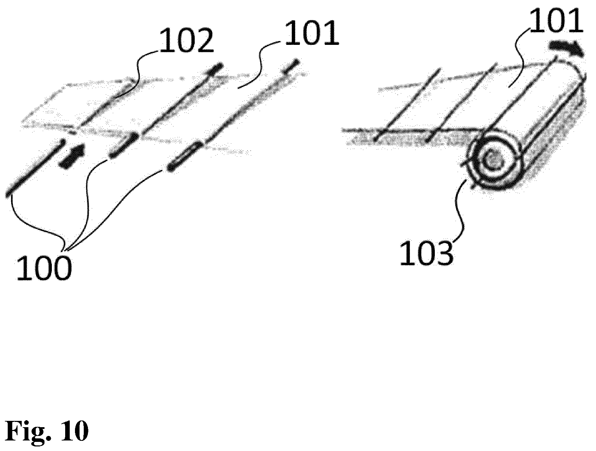

Vorbereitung, Transport und Aufbau eines funktionalen Folientunnels: Nach Beendigung der Programmierung des Formgedächtnispolymers werden die geraden Stangen/Rohre 100 in äquidistante vorliegende Folientaschen 102 der Plastikfolie 101 eingeführt. Die Folie 101 mit den eingeführten Stangen/Rohren 100 kann danach wie in Fig. 10 rechts gezeigt zu einer Rolle 103 aufgerollt werden.

Die Plastikfolie stellt ein handelsübliches Material dar. Beispielsweise kann eine Gitterfolie, Luftpolsterfolie-Wärmefolie, Frostschutzfolie, Isolierfolie, Noppenfolie, Anti-Tau-Gewächshausfolie, Gartenfolie, Treibhausfolie, Lochfolie, Schlitzfolie, Schlauchfolie oder Luftpolsterfolie verwendet werden. Nachstehend wird der Einfachheit halber stets von einer "Plastikfolie" gesprochen.

Man beachte, dass die Geometrie der Folientaschen dem Querschnitt der Stange bzw. des Rohres angepasst wird. Genau genommen bedeutet dies, dass eine oder mehrere Führungsschienen oder -vorlagen hierfür eingearbeitet sein können, bzw. die Taschen aus Plastikfolie direkt die entsprechende Form aufweisen. Dies stellt sicher, dass später beim Auslösen des Formgedächtnis-Effekts der korrekte, richtungsgesteuerte Aufbau der gesamten Konstruktion entgegengesetzt zur gewählten Programmierungsrichtung beim Auslösen des Formgedächtnis-Effekts erfolgen kann.

Um ein fehlerfreies Funktionieren zu ermöglichen, werden - speziell im Bereich der Rohr-, bzw. Stangen-Enden - nach der Programmierung des FGP Markierungen aufgebracht, die zeigen, wie weit die Stangen/Rohre aus FGP in die vorgesehenen Folientaschen geschoben werden müssen (vgl. Fig. 10, links).

Fig. 10 illustriert das Einführen der geraden (bereits programmierten) Stangen/Rohre 100 aus FGP in die Taschen 102 einer Plastikfolie (links) und anschließendes Aufrollen der Gesamtkonstruktion (rechts). Die gesamte Konstruktion kann in dem aufgerollten Zustand bis zum möglichen Einsatzort transportiert werden. In Hinblick auf die Aufbewahrung und den Transport von FGP-basierten Folientunneln ist zu beachten, dass sowohl die Auslieferung als auch die Lagerung der Stangen/Rohre aus FGP bei Temperaturen unterhalb der Schalttemperatur und oberhalb der Formfixierungstemperatur erfolgt.

Zusätzlich ist durch eine geeignete Verpackung sicherzustellen, dass die Stangen/Rohre aus FGP in einem trockenen Milieu aufbewahrt werden, da sonst die Gefahr besteht, dass der FGE aufgrund von aufgenommenem Wasser partiell ausgelöst wird (sogenannter Weichmachereffekt) oder dass das Material neu programmiert wird.

Dem entsprechend umfasst ein Verfahren zur Herstellung einer Vorrichtung der beschriebenen Art beispielsweise die Schritte:
(a) Bereitstellen eines flächigen Materials;
(b) Befestigen zumindest eines Stützelements am flächigen Material, wobei das zumindest eine Stützelements zumindest ein Formgedächtnispolymer umfasst und eine im Wesentlichen gerade Form aufweist und/oder in einer temporären Konfiguration des zumindest einen Formgedächtnispolymers vorliegt;
(c) Aufrollen oder Zusammenfalten des mit zumindest einem Stützelement versehenen flächigen Materials.

Die aufgerollte, nicht entfaltete Form der beschriebenen Vorrichtungen bietet beispielsweise den Vorteil einer platzsparenden Lagerung und eines erleichterten Transports.

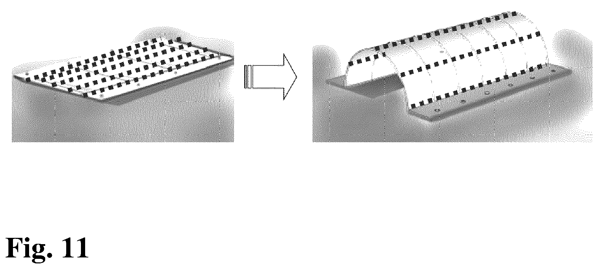

Am Einsatzort wird die Konstruktion so ausgebreitet wie in Fig. 11 dargestellt. Es empfiehlt sich, den Folientunnel an einem wärmeren Tag bei Temperaturen, die nur knapp unter Tₜᵣₐₙₛ des Formgedächtnispolymers liegen, aufzubauen, da dann eine verhältnismäßig geringe Wärmemengenzufuhr durch den Benutzer zum Auslösen des Formgedächtnis-Effekts erforderlich ist.

Fig. 11 zeigt eine Plastikfolie mit programmierten Stangen/Rohren aus FGP vor dem Auslösen des Formgedächtniseffekts (links) und danach (rechts). Querverstrebungen zur Erhöhung der Gesamtstabilität sind sowohl links als auch rechts durch die gepunkteten Linien angedeutet.

Nachdem die Konstruktion vollständig auf dem Boden ausgebreitet worden ist, können, falls nötig, Verbindungsstangen/-rohre aus Polymer oder Metall als Querverstrebungen für die Stangen/Rohre aus FGP, wie in Fig. 11 durch unterbrochene Linien angedeutet, eingesetzt werden. Abgesehen von der Verbindung der Mittelpunkte der Stangen/Rohre aus FGP (gepunktete Linie am Scheitelpunkt der Bögen in Fig. 11, rechts) kann auch in den Randbereichen der Plastikfolie bzw. zwischen diesen (gepunktete Linien links und rechts des Scheitelpunktes in Fig. 11) eine beliebige Anzahl von Querverstrebungen eingesetzt werden. All diese Verbindungsstangen bzw. -rohre verleihen der Gesamtkonstruktion ein höheres Maß an Stabilität.

Dabei können die Verbindungsstangen/-rohre aus Polymer oder Metall stets mindestens einen oder mehrere Zwischenräume zwischen den Stangen/Rohren aus FGP miteinander überbrücken. Sie können direkt mit den Stangen/Rohren aus FGP verbunden werden, was voraussetzt, dass die Stangen/Rohre aus FGP entsprechend dimensionierte Durchbrüche aufweisen, in die die Enden der Verbindungsstangen/-rohre aus Polymer oder Metall eingesetzt werden können.

Auch kann die Plastikfolie 101 so konzipiert sein, dass zueinander benachbarte Folientaschen 102 miteinander verbunden sind, was später eine einfachere Temperierung, z.B. mit heißem Wasser ermöglicht.

Kommen die in Fig. 1, unten gezeigten längeren Stangen/Rohre aus FGP zum Einsatz, deren Enden in der permanenten Form abgewinkelt sind, so können nach dem Auslösen des Formgedächtnis-Effekts die abgewinkelten Enden mit dem Erdreich verbunden werden.

Der Formgedächtniseffekt wird durch Erwärmen über Tₜᵣₐₙₛ des Formgedächtnispolymers ausgelöst. Das kann auf verschiedene Art und Weise geschehen. Das Erwärmen des FGP kann unter Einsatz einer Infrarot-Wärmelampe, eines Heizstrahlers, mit warmem Wasser einer Temperatur T (T > Tₜᵣₐₙₛ), mit einem Warmluftgebläse, aber auch an besonders warmen Tagen direkt durch die Wechselwirkung mit der ausreichend warmen Umgebung geschehen. In sehr warmen geographischen Regionen wird durch die direkte Sonneneinstrahlung, die umgebende Luft bzw. das Abstrahlen von Wärme aus dem Erdreich der FGE direkt induziert.

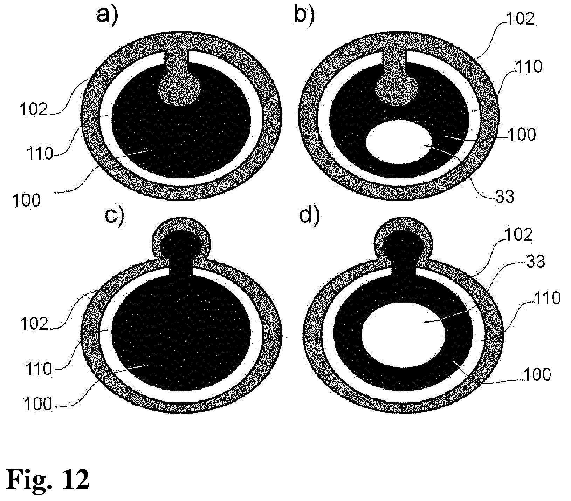

Nutzt man zur Temperierung der Rohre aus FGP eine Flüssigkeit (z.B. Wasser), so werden direkt die Rohrenden mit Schläuchen verbunden, die an ein temperiertes Flüssigkeitsreservoir angeschlossen sind (dies ist jedoch nicht in Fig. 12 dargestellt). Ebenso können auch die Folientaschen 102 direkt mit Schläuchen verbunden werden, um die in den Folientaschen angeordneten Stangen/Rohre aus FGP zu temperieren (Fig. 12). Eine Umwälzpumpe sorgt für das Durchströmen der Kanäle 33 mit dem temperierten Fluid und bewirkt über die Temperierung der Stangen/Rohre aus FGP deren Rückstellung und das Aufrichten des Folientunnels. Ebenso können bei geeigneter Gestaltung der Folientaschen und deren Endigungen, die Zwischenräume 110 zwischen Stange/Rohr 100 und Folie der Folientasche 102 von einem temperierten Fluid durchströmt werden.

Die Verwendung von sich selbst aufrichtenden Stützen bzw. Stützbögen bewirkt eine signifikante Vereinfachung der Montage bzw. des Aufbaus von Folientunneln, da sich das Zutun eines Operators im Wesentlichen auf das Ausrollen oder Ausbreiten der mit den Stützelementen ausgestatteten Folien und ggf. den Anschluss der Verbinder bzw. der Schläuche an den dafür vorgesehenen Adapterstücken beschränkt. Das verringert den Zeit- und Kostenaufwand für die Montage.

Vorteile können sich auch daraus ergeben, dass Anbau-Flächen, für die Folientunnel vorgesehen sind, zunächst lediglich mit einer schützenden Folienbahn bedeckt sind, bis die eingetragene Wärmemenge das Auflaufen oder das Erreichen eines bestimmten Zustandes der jeweiligen Kultur bewirkt. Eine im Tagesverlauf akkumulierte ausreichende Wärmemenge bewirkt dann das selbsttätige Aufrichten der Stützelemente und die Errichtung des Folientunnels.

Der Zeitpunkt des selbsttätigen, z.B. allein durch Sonneneinstrahlung induzierten, Errichtens der Vorrichtung kann über die Konfiguration der Stützelemente und der Eigenschaften des FGP bestimmt werden, indem der für das Auslösen des FGE erforderliche Mindest-Wärmeeintrag durch die im Tagesverlauf unter den jeweiligen Witterungsbedingungen absorbierbare Wärmemenge festgelegt ist. Alternativ ist es möglich, den Zeitpunkt der Errichtung des Folientunnels frei zu wählen, indem ein entsprechend geheiztes Fluid durch ein oder mehrere Stützelemente geleitet wird oder eine Widerstandsheizung aktiviert wird, die im Inneren der Stangen/Rohre angeordnet ist. Letztgenannte Verfahren zur Errichtung eines Folientunnels bieten den besonderen Vorteil, bei zumindest abschnittsweise miteinander verbundenen Kanälen benachbarter Stützelemente, oder beim Anschluss individueller Stützelemente oder einer Vielzahl benachbarter Stützelemente einen Folientunnel nur partiell oder schrittweise, in Abhängigkeit vom jeweiligen Erfordernis aufzurichten.

Fig. 12 zeigt eine beispielhafte schematische Darstellung des Querschnitts einer Stange 100 (in Bild a und c) bzw. eines Rohres 100 (in Bild b und d) aus FGP mit jeweils einem Führungslager (Nut: Bilder a und b, bzw. Grat: Bilder c und d), die sich in einer Folientasche 102 befindet. Mit Hilfe von warmem Wasser, dass die Kanäle 33, bzw. die Zwischenräume 110 zwischen Folientasche 102 und Stange/Rohr 100 durchströmt, kann das Stützelement temperiert und in seine permanente Form überführt werden.

Bei Rohren aus FGP erfolgt die Temperierung des Formgedächtnispolymers deutlich schneller als bei Stangen aus FGP, da hier eine Temperierung sowohl von "außen" als auch von "innen" erfolgen kann.

Werden Formgedächtnispolymere mit elektroaktiven oder magnetosensitiven Füllmaterialien ausgerüstet, so bietet sich alternativ das indirekte Erwärmen mit einem externen magnetischen oder elektrischen Feld an. Zusätzlich kann die Wärmeleitfähigkeit des Formgedächtnispolymers durch verschiedene Füllmaterialien erhöht werden. Eine Auswahl solcher Materialien wird nachfolgend beispielhaft benannt.

Infolge des Auslösens des Formgedächtnis-Effekts verformen sich die Stützelemente, bzw. die Stangen/Rohre aus FGP, wobei sie eine Kraft orthogonal zum Boden (entgegengesetzt der Verformungsrichtung) entwickeln. Dabei kehren die Stangen/Rohre aus FGP in ihre ursprüngliche (d.h. permanente) Form zurück. Das führt dazu, dass sich die Stangen/Rohre aus FGP aufrichten und dabei die Plastikfolie mit sich führen. Die einander gegenüberliegenden Kontaktflächen zum Boden werden am Boden zueinander hingezogen. Das führt dazu, dass die mittleren Abschnitte der Stangen/Rohre zum Abschluss des Formgedächtnisübergangs den größtmöglichen Abstand zum Boden aufweisen. Setzt man eine Flüssigkeit zur Temperierung ein und ist der Aufbau der sich selbst aufrichtenden Konstruktion erfolgt, dann lässt man das Wasser aus den Folientaschen/Rohren aus FGP ab.

Nach der Materialerwärmung über Tₜᵣₐₙₛ des FGPs werden die Kontaktflächen zum Boden im Erdreich verankert. Hierfür wird das handelsübliche Equipment an Befestigungsmitteln eingesetzt, z.B. gebräuchliche Erdanker. Es können auch wie in Fig. 11 (rechts) angedeutet schwere Platten, beispielweise Steinplatten, oder die zur Befüllung der Stützelemente mit einem geheizten Fluid verwendeten Rohre zur Beschwerung der Gesamtkonstruktion eingesetzt werden. Sollte es dabei zu Kaltverformungseffekten an den Enden der Stangen/Rohre aus FGP kommen, so lassen sich diese später durch lokales Erwärmen leicht rückgängig machen.

Im Folgenden wird eine Alternative zum vorstehend beschriebenen Aufbau gegeben. Die für das Auslösen des Formgedächtnis-Effekts notwendige Wärmemenge kann auf ein Minimum reduziert werden, wenn man nach dem "Ziehharmonika"-Prinzip vorgeht:
1. Die programmierten Stangen/Rohre aus FGP werden wie vorgesehen in die Plastikfolie eingeführt. Alle Stangen/Rohre aus FGP liegen in kleinstmöglichen Abständen unmittelbar nebeneinander. Der FGE wird ausgelöst, bevor die Gesamtkonstruktion vollständig ausgebreitet worden ist.
2. Die Stangen/Rohre aus FGP werden in den für sie vorgesehenen räumlichen Abständen zueinander aufgestellt und dabei die Plastikfolie über der zu schützenden Fläche ausgebreitet. Durch den visuellen Vergleich einander benachbarter Stangen/Rohre aus FGP lässt sich frühzeitig erkennen, ob die Rückverformungen in die permanente Form vollständig abgeschlossen sind.

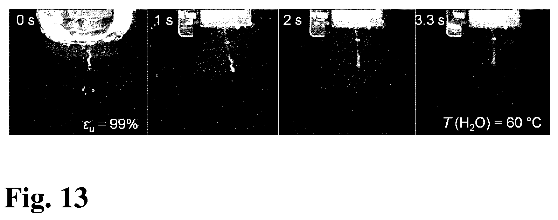

Details zur Rückverformungsgeschwindigkeit eines Formgedächtnispolymers beim Auslösen des Formgedächtnis-Effekts: Gemäß einem Ausführungsbeispiel zur Bestimmung der Rückstellgeschwindigkeit eines Adipat-basierten Formgedächtnispolymers der Bayer MaterialScience AG in heißem Wasser wurde festgestellt, dass bei einer Wassertemperatur von 60 °C die Formrückstellung eines um εₘ =100% verstreckten Zugstabes innerhalb von 3,3 s abgeschlossen ist. Das ist in Fig. 13 gezeigt. Die Bilderserie der Fig. 13 zeigt die in 60 °C heißem Wasser ausgelöste Dehnungsrückstellung eines Zugstabes aus Adipat-basiertem FGP.

Kombination mit handelsüblichen Ergänzungen und Gebrauchshinweise: Die Folientunnel können nach erfolgtem Aufbau mit ergänzenden Vorrichtungen zur Belüftungs, Beleuchtung und Bewässerung ausgestattet werden. Es können auch Solar-Ventilatoren eingesetzt werden. Dabei ist zu beachten, dass die tragenden Stangen/Rohre aus FGP nicht übermäßig belastet werden. Zur gleichmäßigen Temperierung des Folientunnels ist die Kombination mit Wärmespeichern möglich, solange es nicht zu einem Überschreiten der Schalttemperatur des Formgedächtnispolymers kommt, da sonst die Gefahr besteht, dass die Stangen/Rohre aus FGP mechanisch instabil werden. Deshalb wird davon abgeraten, Konstruktionen aus sich selbst aufrichtenden, FGP-basierten Strukturen dauerhaft auf Temperaturen oberhalb der Schalttemperatur zu erwärmen.

Gemäß einer Ausführungsform können die gewählten Plastikfolien so strukturiert sein, dass Lüftungsklappen oder Fenster (z.B. Dachfenster) oder Türen bereits in ihnen integriert sind, z. B. durch das Vorhandensein von Reißverschlüssen. Die Strukturierungsmöglichkeiten sind sehr vielfältig. Auch können Streben für die Befestigung von Tomatenstangen oder zur Befestigung von Schnüren zur Kultivierung von Kletterpflanzen oder von Schlangengurken eingesetzt werden.

Gemäß einer weiteren Ausführungsform kann ein Folientunnel auf seinem Boden mit Vliesen (Mulchvlies, Spinnfaser-Vliese, Gärtnervliese, Ernteverfrühungsvliese) und Bodengeweben für Unkrautschutz, Unkrautstopp, Insektenschutz, Frostschutz, Ernteverfrühung usw. ausgelegt sein, was idealerweise vor dem in Fig. 11 dargestellten Aufbau erfolgt.

Demontage des Folientunnels: Um einen aufgebauten und im Erdreich verankerten Folientunnel abzubauen, werden die vorstehend aufgeführten ergänzenden Vorrichtungen sowie die Befestigungselemente aus dem Erdreich und ggfs. die Beschwerungen in den Randbereichen entfernt. Nun werden die Querverstrebungen abgebaut, die Plastikfolie wird aufgeschnitten und die Stangen aus FGP entnommen und zusammengestellt. Direkt über dem Boden werden die Stangen/Rohre aus FGP mit geeigneten Verbindungselementen so miteinander verbunden, dass ihr Abstand zueinander entsprechend der Steglänge 65 des Abstandshalters 64 konstant gehalten wird (Fig. 6). Nun kann das zuvor beschriebene "Flügeltüren"-Konzept angewendet werden (Fig. 7a). Ebenso ist möglich, auf die Verbindung der Stangen/Rohre aus FGP untereinander zu verzichten und sie direkt mit Hilfe von Klemmvorrichtungen 76 oder anderweitig in den Flügeltüren 75 zu befestigen (Fig. 7b). Alternativ zu dem Flügeltüren-Konzept kann die Rücküberführung der Stangen/Rohre aus FGP in die temporäre Form durch Auflast erfolgen. Liegen dann die Stangen/Rohre aus FGP in einem im Wesentlichen gestreckten Zustand vor, können sie in eine neue Plastikfolie eingesetzt werden.

Technische Details: Die Gesamtlänge eines Folientunnels kann zwischen 50 cm und mehreren 100 m liegen, insbesondere zwischen 5 und 100 m. Der Außendurchmesser der Stangen/Rohre aus FGP liegt zwischen 0.5 mm und 300 mm, insbesondere zwischen 10 mm und 100 mm. Die Wahl eines hinreichend großen Durchmessers stellt sicher, dass die Gesamtkonstruktion, bestehend aus Plastikfolie und Stangen/Rohren, aufgerichtet werden kann und dass die Stangen/Rohre aus FGP das Gewicht der Plastikfolie auch bei Temperaturen oberhalb von Tₜᵣₐₙₛ des Formgedächtnispolymers zuverlässig tragen. Die Stangen/Rohren aus FGP können äquidistant zueinander benachbart sein. In solchen Fällen empfiehlt sich die Wahl von Abständen im Bereich von 0,1 m bis zu 10 m, insbesondere zwischen 0,5 m und 3 m. Die Dicke der Plastikfolie liegt zwischen 0.01 mm und 20 mm, insbesondere zwischen 0.05 mm und 3 mm. Die Schalttemperatur des einzusetzenden Formgedächtnispolymers liegt idealerweise zwischen 30 °C und 50 °C, die Formfixierungstemperatur liegt idealerweise unterhalb von 23°C. Die Form der Folientaschen ist nahezu passgenau zu dem Querschnitt der eingesetzten Stangen/Rohre aus FGP. Die eingesetzte Plastikfolie ist thermisch stabil bei Temperaturen, die sowohl beim Auf- als auch beim Abbau eines Folientunnels durch Erwärmen der Stangen/Rohre aus FGP auf Temperaturen T>Tₜᵣₐₙₛ(FGP) auftreten. Die Steglänge 65 der Abstandshalter 64 zwischen den Stangen/Rohren aus FGP (Fig. 6) beträgt 1 mm bis 500 mm, bevorzugt liegt sie zwischen 20 mm und 100 mm.

Vorzüge eines funktionalen Folientunnels: Nachfolgend werden beispielhaft einige besondere Vorzüge der beschriebenen sich selbst aufrichtenden Vorrichtung am Beispiel eines Folientunnels zusammengefasst:
- Der Folientunnel ist ohne großen Aufwand transportabel.
- Es gibt einen deutlichen Zugewinn an Funktionalität gegenüber Folientunneln wie beispielsweise gegenüber einem Filclair Tunnel. Da das FGP in die Plastikfolie integriert werden kann, entfällt ein späteres, kompliziertes Ziehen der Plastikfolie über die Rundbögen. Die Montage ist über den applizierten Stimulus auch sequentiell "abrufbar" und somit leicht zu steuern.
- Der Folientunnel ist wesentlich leichter als konventionell Konstruktionen, in denen vermehrt Metallstangen zum Einsatz kommen. Somit ist auch ein Standortwechsel vergleichsweise leichter zu realisieren.
- Im Gegensatz zu stationär aufgebauten Gewächshäusern handelt es sich bei Folientunneln um genehmigungsfreie Pflanzen-Schutz-Überdachungen ohne Stahl- und Betonfundamente, für die in Deutschland von Seiten der Baubehörden keine Baugenehmigung erforderlich ist.
- Die für den Einsatz in Frage kommenden Formgedächtnispolymere sind Kunststoffe, die eine "selbstheilende" Wirkung haben: Bei Verformungen infolge von Unwettern kann die permanente Form leicht wieder hergestellt werden. Dies geschieht durch erneutes Erwärmen deformierter Stangen/Rohre aus FGP über die Schalttemperatur des Formgedächtnispolymers.
- Folientunnel und ihre Varianten (sich selbst aufrichtende Strukturen) können bei entsprechender Dimensionierung für eine Reihe von Anwendungen eingesetzt werden.
- Weitere Anwendungsmöglichkeiten bietet die Verwendung von Textilien, Vlies, Papier, Polymernetz, Drahtnetz, Gaze oder eine Kombination aus einer Folie mit derartigen oder anderen flächigen Materialien.

Eine sich selbst aufrichtende Vorrichtung der beschriebenen Art kann nicht nur als Überdachung bzw. Folientunnel beim Anbau von Zier- oder Nutzpflanzen im Kleingarten- und Hobby-Bereich sowie in der Agrar- und Forstwirtschaft verwendet werden. Andere Einsatzgebiete für die beschriebene Vorrichtung betreffen zumeist temporäre oder saisonale Überdachungen, Schutz- und Spannwände sowie Unterstände, Carports, Bootsüberdachungen, Schwimmbadabdeckungen bzw. Swimming-Pool-Überdachungen, Teichüberdachungen, Notunterkünfte, Notgaragen, Abdeckungen oder anderweitige Bestandteile von Marktständen, Markisen und Sonnenschutzdächer, Schattiernetz, Hagelschutznetz, Vogelschutz-Netz, Starenschutz, Zelte (u.a. auch Camping- und Partyzelte), Pavillons, Geräteschuppen, Lagerraum, Überdachungen von Volieren oder Freiläufen für Kleintiere (z.B. Kaninchen- und Hasenställe, Schildkröten-Ausläufe, Geflügelstallungen etc.), Teichabdeckungen, Komposter, Zäune, Schneezäune oder die Verwendung als Schneefang - beispielsweise an Dachschrägen, und/oder als Werbeträger für die Sichtwerbung, insbesondere für die Außenwerbung.

Formgedächtnispolymere: Zum jetzigen Zeitpunkt weisen die meisten der in der Literatur beschriebenen Formgedächtnispolymere einen thermisch induzierten Formgedächtniseffekt auf. Das bedeutet, dass bei Erwärmung programmierter Polymermaterialien über eine definierte Übergangstemperatur eine durch Entropieelastizität bedingte Rückverformung stattfindet. Formgedächtnispolymere sind in der Regel Polymere, bei denen chemische (kovalente) oder physikalische (nicht kovalente) Vernetzungsstellen die permanente Form bestimmen. Beispiele dieser schaltbaren Polymere sind phasensegregierte, lineare Blockcopolymere, die aus Hart- und Weichsegmenten aufgebaut sind.

Gemäß einem Ausführungsbeispiel kann das FGP ein thermoplastisches Formgedächtnispolymer, insbesondere aus der Gruppe linearer Blockcopolymere, insbesondere Polyurethane und Polyurethane mit ionischen oder mesogenen Komponenten, Blockcopolymere aus Polyethylenterephthalat und Polyethylenoxid, Blockcopolymere aus Polystyrol und Poly(1,4-butadien), ABA Triblock-Copolymere aus Poly-(2-methyl-2-oxazolin) (A-Block) und Polytetrahydrofuran (B-Block), Multiblockcopolymere aus Polyurethanen mit Poly(ε-caprolacton)-Schaltsegment, Blockcopolymere aus Polyethylenterephthalat und Polyethylenoxid, Blockcopolymere aus Polystyrol und Poly(1,4-butadien), Polyurethansysteme, deren Hartsegmentbildende Phase aus Methylendiphenyldiisocyanat (MDI) oder Toluol-2,4-diisocyanat und einem Diol, insbesondere 1,4-Butandiol, oder einem Diamin und einem Schaltsegment auf der Basis eines Oligoethers, insbesondere Polytetrahydrofuran oder eines Oligoesters, insbesondere Polyethylenadipat, Polypropylenadipat, Polybutylenadipat, Polypentylenadipat oder Polyhexalenadipat besteht, Materialien mit einer Hartsegment-bildenden Phase aus Toluol-2,4-diisocyanat, MDI, Diisocyanaten, die insbesondere aus MDI oder Hexamethylendiisocyanat in Carbodiimid-modifizierter Form und aus Kettenverlängerern, insbesondere Ethylenglycol, Bis(2-hydroxyethyl)hydrochinon oder einer Kombination aus 2,2-Bis(4-hydroxyphenyl)propan und Ethylenoxid aufgebaut sind, deren Schaltsegmentbestimmende Blöcke aus Oligoethern, insbesondere Polyethylenoxid, Polypropylenoxid, Polytetrahydrofuran oder aus einer Kombination aus 2,2-Bis(4-hydroxyphenyl)propan und Propylenoxid, oder aus Oligoestern, insbesondere Polybutylenadipat, bestehen, Materialien aus Polynorboren, Naturkautschuk (cis- 1,4-Polyisopren), trans-1,4-Polyisopren, Graft-Copolymere aus Polyethylen/Nylon-5, Blockcopolymere mit polyedrischen oligomeren Silsesquioxanen (POSS), einschließlich den Kombinationen Polyurethan/POSS, Epoxid/POSS, Polysiloxan/POSS, Polymethylmethacrylat/POSS, silikonbasierte Formgedächtnispolymere und Materialien aus Poly(cycloocten) sein.

In Poly(ester urethanen) lassen sich Schaltsegmentblöcke u.a. aus Poly (ε-caprolacton) diolen mit zahlenmittleren Molekulargewichten zwischen 1500 und 8000 aufbauen. Die Schalttemperatur für den Formgedächtniseffekt kann je nach Gewichtsanteil des Schaltsegments (Variation zwischen 50 und 90 Gew.-%) und Molekulargewicht der Poly(ε-caprolacton)diole zwischen 44 und 55°C variieren. Die Kristallisationstemperaturen liegen zwischen 25 °C und 30°C. Blockcopolymere bestehend aus trans-Polyisopren und Urethanen zeigen den FGE, die Rückstelltemperatur liegt bei 65°C, die Kristallisationstemperatur ist abhängig von der chemischen Zusammensetzung und kann zwischen 0°C und 30°C eingestellt werden. Durch Einsatz von Ruß als Füllstoff bzw. Hilfsmaterial können die Formgedächtnis-Eigenschaften (u.a. die Rückstellrate, und Rückstell-Temperatur) von trans-Polyisopren verändert werden.

Gemäß einem anderen Ausführungsbeispiel kommen Polyadipat-basierte Poly(ester urethane) für die hier beschriebene Anwendung in Betracht, weil die Schalttemperatur ihrer Weichsegmente etwa bei 37°C und die Kristallisationstemperatur deutlich unterhalb von 23°C (≤10°C) liegt. Hinzu kommt, dass das Material über ausreichende Formgedächtniseigenschaften (Formrückstellbarkeit, Fixierbarkeit) verfügt und langzeitstabil ist. Für das beschriebene Poly(ester urethan) konnte eine leichte Verarbeitbarkeit nachgewiesen werden. Darüber hinaus konnte nachgewiesen werden, dass in etwa 75% der zur Verstreckung aufgebrachten Spannung bei der Formrückstellung (während des Auslösens des Formgedächtnis-Effekts) wieder bereitgestellt wird.

Gemäß einem anderen Ausführungsbeispiel kann das FGP ein elastomeres FGP, insbesondere aus der Gruppe Polyvinylchlorid, Polyethylen-Polyvinylacetat-Copolymere, kovalent vernetzte Copolymersysteme aus Stearylacrylat und Ester der Methacrylsäure sein.

Für die beschriebene Anwendung können auch konventionelle, im Folientunnelbereich eingesetzte Materialien verwendet werden, die über ausreichende Formgedächtnis-Eigenschaften verfügen. Geeignet sind alle Blockcopolymere, die idealerweise eine Schmelztemperatur oberhalb von 30°C und eine Kristallisationstemperatur unterhalb von 23°C haben. Hinzu kommen die Materialien, die eine Glasübergangstemperatur in dem Bereich zwischen 30 und 100 °C, insbesondere zwischen 40 und 60°C aufweisen.

Gemäß vorteilhafter Ausführungsbeispiele kann das FGP als Formgedächtnispolymer-Komposit ausgebildet sein. In diesem Zusammenhang wird darauf hingewiesen, dass die Begriffe Formgedächtnispolymer und Formgedächtnispolymer-Komposit hier austauschbar verwendet werden. Mit anderen Worten, kann anstelle eines Formgedächtnispolymers auch ein entsprechend geeignetes FGP-Komposit oder umgekehrt verwendet werden. Als FGP-Komposite werden Materialien bezeichnet, bei denen ein oder mehrere Füllstoffe in die FGP-Matrix eingebettet sind.

Als Füllstoffe kommen beispielsweise in Betracht magnetische Nanoteilchen, ferromagnetische Partikel, insbesondere NiZn-Partikel, Eisenoxidpartikel und Magnetitpartikel. Ebenfalls können sogenannte Nanoclays als Füllstoffe verwendet werden. Die Nanoclays können beispielsweise auf Basis von Siliziumnitrid, Siliziumcarbid, Siliziumoxid, Zirkonoxid und/oder Aluminiumoxid gebildet sein.

Andere mögliche Füllstoffe sind oligomere Silsesquioxane, Graphit-Partikel, Graphene, Kohlenstoffnanoröhrchen, Kunstfasern, dabei insbesondere Kohlenstofffasern, Glasfasern oder Kevlarfasern, aber auch Metallpartikel. Selbstverständlich können auch Kombinationen solcher Füllmaterialien verwendet werden. Die Füllstoffe sind geeignet, um die mechanischen, elektrischen, magnetischen und/oder optischen Eigenschaften eines Formgedächtnispolymers einzustellen und an den jeweiligen Anwendungszweck anzupassen.

Für den hier beschriebenen Verwendungszweck eines FGP in Stützelementen für Folientunnel oder vergleichbare Vorrichtungen eignen sich neben den beschriebenen thermosensitiven FGP auch magnetosensitive oder elektroaktive Materialien. Magnetisch steuerbare Formgedächtnispolymere können durch Einarbeitung fein verteilter magnetischer Nanoteilchen, z.B. aus Eisenoxid, in den Kunststoff gewonnen werden. Solche Materialien sind dann in der Lage, die Energie eines magnetischen Feldes in Wärme umzuwandeln, so dass der FGE in programmierten Formgedächtnispolymeren ausgelöst wird. Über den Anteil an Nanoteilchen und die Stärke des Magnetfeldes kann eine gewünschte Temperatur im Polymer gezielt eingestellt werden. Als elektroaktive Polymere (EAP) können z.B. Formgedächtnispolymer-Komposite mit Kohlenstoffnanoröhrchen eingesetzt werden. Somit gibt es verschiedene Möglichkeiten, den FGE auszulösen.
Die vorliegende Erfindung wurde anhand von Ausführungsbeispielen erläutert. Diese Ausführungsbeispiele sollten keinesfalls als einschränkend für die vorliegende Erfindung verstanden werden. Die Erfindung wird durch den Schutzbereich der angehängten Ansprüche definiert.

## Patentansprüche

1. Vorrichtung, umfassend ein flächiges Material (101) und zumindest ein Stützelement (20, 30, 50, 60, 70, 80, 90, 100) das mit dem flächigen Material (101) verbunden ist, wobei das zumindest eine Stützelement (20, 30, 50, 60, 70, 80, 90, 100) zumindest ein Formgedächtnispolymer derart aufweist, sodass die Vorrichtung in einer ersten Konfiguration des zumindest einen Formgedächtnispolymeren eine im Wesentlichen flache Form aufweist und
in einer zweiten Konfiguration des Formgedächtnispolymeren eine im Wesentlichen gewölbte Form aufweist.

2. Vorrichtung gemäß Anspruch 1, wobei
die erste Konfiguration durch Wärmezufuhr in die zweite Konfiguration überführt werden kann.

3. Vorrichtung gemäß Anspruch 1 oder 2, wobei
das zumindest eine Stützelement (20, 30, 50, 60, 70, 80, 90, 100) einen Kanal (33, 53) aufweist, der an seinen jeweiligen Enden in einen Anschluss mündet, der geeignet ist für eine Schlauch- , Steck-, Schraub- , Klemm-, Rast-, Spann- oder Press- Verbindung.

4. Vorrichtung gemäß Anspruch 1 bis 3, wobei
die zweite Konfiguration des Formgedächtnispolymeren induziert wird durch ein im Kanal (33, 53) befindliches temperiertes Fluid, oder durch ein im Kanal (33, 53) erwärmtes elektrisch leitfähiges Material.

5. Vorrichtung gemäß Anspruch 1 bis 4, wobei
das zumindest eine Stützelement (20, 30, 50, 60, 70, 80, 90, 100) geschlossene Hohlräume aufweist.

6. Vorrichtung gemäß Anspruch 1 bis 5, wobei
das zumindest eine Stützelement (20, 30, 50, 60, 70, 80, 90, 100) zumindest abschnittsweise einen Querschnitt mit einer zerklüfteten Kontur und/oder eine zerklüftete Oberfläche derart aufweist,
sodass der Wärmeaustausch mit der Umgebung erleichtert wird, und/oder zumindest abschnittsweise eine oder mehrere in Längsrichtung hintereinander liegende Ausstülpungen (21, 31, 51) oder Erhebungen (21, 31, 51) aufweist, denen im Wesentlichen korrespondierende Einstülpungen (22, 32, 52), Vertiefungen (22, 32, 52) oder Gräben (22, 32, 52) im wesentlichen diametral gegenüber liegen.

7. Vorrichtung gemäß Anspruch 1 bis 6, wobei
das zumindest eine Stützelement (20, 30, 50, 60, 70, 80, 90, 100) zumindest ein Befestigungsmittel aufweist, das mit einem korrespondierenden Befestigungsmittel eines zweiten Stützelements (20, 30, 50, 60, 70, 80, 90, 100) verbindbar ist.

8. Vorrichtung gemäß Anspruch 1 bis 7, wobei das gewählte Formgedächtnispolymer und die innere Struktur des Stützelements (20, 30, 50, 60, 70, 80, 90, 100) angepasst sind, sodass bei einer gegebenen Intensität der Sonneneinstrahlung das Stützelement (20, 30, 50, 60, 70, 80, 90, 100) so erwärmt wird, dass das Formgedächtnispolymer des Stützelements (20, 30, 50, 60, 70, 80, 90, 100) seine zweite Konfiguration einnimmt und ein selbsttätiges Aufrichten und/oder Wölben und/oder Entfalten der Vorrichtung erfolgt.

9. Vorrichtung gemäß der Ansprüche 1 bis 8, wobei
das flächige Material (101) ausgewählt ist aus der Gruppe der Materialien, umfassend:
Folie, Textil, Vlies, Papier, Gespinst, Polymernetz, Drahtnetz, Gaze.

10. Verwendung einer Vorrichtung gemäß Anspruch 1 bis 9, ausgewählt aus der Liste umfassend:
Folientunnel; Überdachung oder Schutzwand für einen Markt- , Verkaufs- oder Messestand; Schutz-Überdachung beim Anbau von Zier- oder Nutzpflanzen; Unterstand; Carport; Bootsüberdachung; Schwimmbad-Abdeckung bzw. Poolüberdachung; Notunterkunft; Notgarage; Markise; Sonnenschutzdach; Schattierung, Windschutz, Hagelschutz; Vogelschutz; Starenschutz; Zelt; Partyzelt; Pavillon; Geräteschuppen; Lagerraum; Überdachung von Volieren oder Freiläufen für Kleintiere; Teichabdeckung; Komposter; Zaun; Schneezaun, Schneefang, und/oder Werbeträger für die Sichtwerbung, insbesondere Außenwerbung.

11. Verfahren zur Herstellung einer Vorrichtung gemäß Anspruch 1 bis 9, umfassend die Schritte:
(a) Bereitstellen eines flächigen Materials (101);
(b) Befestigen zumindest eines Stützelements (20, 30, 50, 60, 70, 80, 90, 100) am flächigen Material (101), wobei das zumindest eine Stützelement zumindest (20, 30, 50, 60, 70, 80, 90, 100) ein Formgedächtnispolymer umfasst und eine im Wesentlichen gerade Form aufweist und/oder in einer temporären Konfiguration des zumindest einen Formgedächtnispolymers vorliegt;
(c) Aufrollen oder Zusammenfalten des mit zumindest einem Stützelement (20, 30, 50, 60, 70, 80, 90, 100) versehenen flächigen Materials (101).

12. Vorrichtung zur wärmeinduzierten Umformung zumindest eines Stützelements, umfassend ein Formgedächtnispolymer, aus einer ersten Form, die einer permanenten oder einer temporären Konfiguration des Formgedächtnispolymeren entspricht, in eine zweite Form, die dementsprechend der temporären oder der permanenten Konfiguration des Formgedächtnispolymeren entspricht, wobei die Vorrichtung, eine erste Fläche (75) umfasst, die zumindest zwei zueinander schwenkbare Flügeltüren (75) aufweist, wobei mittlere Flächennormale der beiden Flügeltüren (75), in einer ersten Stellung der beiden Flügeltüren (75), miteinander einen ersten Winkel bilden oder parallel zueinander verlaufen und wobei, in zumindest einer zweiten Stellung der beiden zueinander schwenkbaren Flügeltüren (75), die mittlere Flächennormale der beiden Flügeltüren (75) dann zueinander parallel verlaufen oder dann miteinander einen zweiten Winkel bilden, sodass das in einer Einspannvorrichtung (76) an den beiden Flügeltüren einsetzbare Stützelement durch einen Heißluftstrom auf eine Temperatur T erwärmbar ist, die größer ist, als die Übergangstemperatut Tₜᵣₐₙₛ des Formgedächtnispolymers, und beim Aufbringen einer die Flügeltüren (75) gegen eine kühle oder gekühlte zweiten Fläche (78) oder Wand (78) drückenden Kraft, das Stützelement durch Absenken der Temperatur aus der ersten Form in die zweite Form umformbar ist.

13. Verfahren zur wärmeinduzierten Umformung zumindest eines Stützelements (20, 30, 50, 60, 70, 80, 90, 100) der Vorrichtung gemäß der Ansprüche 1 bis 11, aus einer ersten Form, die der permanenten oder der temporären Konfiguration des Formgedächtnispolymeren entspricht, in eine zweite Form, die dementsprechend der temporären oder der permanenten Konfiguration des Formgedächtnispolymeren entspricht, umfassend zumindest die Schritte:
(a) Anordnen einer Vielzahl von Stützelementen (20, 30, 50, 60, 70, 80, 90, 100) als Schicht oder als Stapel oder als Schichtstapel übereinander und/oder nebeneinander angeordneter oder lösbar miteinander verbundener Stützelemente einer gegebenen Form an einer ersten Fläche (75), wobei die erste Fläche (75) zumindest zwei zueinander schwenkbare Teilflächen (75) aufweist, deren mittlere Flächennormalen miteinander einen ersten Winkel bilden oder parallel zueinander verlaufen;
(b) Anheben der Temperatur des Formgedächtnispolymers über dessen Glasübergangstemperatur oder dessen Erweichungstemperatur, entweder indirekt durch Beheizen zumindest einer der Teilflächen (75), oder durch unmittelbares Erwärmen der Vielzahl von Stützelementen (20, 30, 50, 60, 70, 80, 90, 100);
(c) Schwenken zumindest einer der beiden Teilflächen (75) in Bezug zur anderen Teilfläche (75) derart, dass die mittleren Flächennormalen der Teilflächen (75), anders als zuvor, nun zueinander parallel verlaufen oder miteinander einen zweiten Winkel bilden, der von jenem des vorausgehenden Verfahrensschrittes (a) abweicht;
(d) Absenken der Temperatur des Formgedächtnispolymers unter dessen Glasübergangstemperatur oder dessen Kristallisationstemperatur, entweder indirekt durch Abkühlen zumindest einer der Teilflächen (75) oder durch den Kontakt der Vielzahl von Stützelementen (20, 30, 50, 60, 70, 80, 90, 100) mit einem Kühlmittel oder einer kühlen oder gekühlten zweiten Fläche (78) oder Wand (78);
(e) Entnahme der nun umgeformten Stützelemente (20, 30, 50, 60, 70, 80, 90, 100) aus der Schicht oder dem Stapel.

## Claims

1. A device comprising a planar material (101) and at least one support element (20, 30, 50, 60, 70, 80, 90, 100) that is connected to the planar material (101), wherein the at least one support element (20, 30, 50, 60, 70, 80, 90, 100) comprises at least one shape memory polymer such that the device has an essentially flat shape in a first configuration of the at least one shape memory polymer and
an essentially arched shape in a second configuration of the shape memory polymer.

2. The device according to claim 1, wherein
the first configuration can be transformed into the second configuration by applying heat.

3. The device according to claim 1 or 2, wherein
the at least one support element (20, 30, 50, 60, 70, 80, 90, 100) comprises a channel (33, 53), the ends of which respectively form a connector suitable for producing a hose connection, a plug connection, a screw connection, a clamping joint, a snap-on connection or a tension or compression joint.

4. The device according to claims 1-3, wherein
the second configuration of the shape memory polymer is induced by means of a tempered fluid that is located in the channel (33, 53) or by means of an electrically conductive material that is heated in the channel (33, 53).

5. The device according to claims 1-4, wherein
the at least one support element (20, 30, 50, 60, 70, 80, 90, 100) comprises closed cavities.

6. The device according to claims 1-5, wherein
the at least one support element (20, 30, 50, 60, 70, 80, 90, 100) has at least sectionally a cross section with a fissured contour and/or a fissured surface
such that the heat exchange with the surroundings is simplified and/or
comprises at least sectionally one or more protuberances (21, 31, 51) or elevations (21, 31, 51) that lie behind one another in the longitudinal direction, wherein essentially corresponding inversions (22, 32, 52), depressions (22, 32, 52) or pits (22, 32, 52) essentially lie diametrically opposite of said protuberances or elevations.

7. The device according to claims 1-6, wherein
the at least one support element (20, 30, 50, 60, 70, 80, 90, 100) comprises at least one fastening means that can be connected to a corresponding fastening means of a second support element (20, 30, 50, 60, 70, 80, 90, 100).

8. The device according to claims 1-7, wherein the chosen shape memory polymer and the internal structure of the support element (20, 30, 50, 60, 70, 80, 90, 100) are adapted such that the support element (20, 30, 50, 60, 70, 80, 90, 100) is at a given intensity of solar irradiance heated in such a way that the shape memory polymer of the support element (20, 30, 50, 60, 70, 80, 90, 100) assumes its second configuration and automatic erection and/or arching and/or unfolding of the device takes place.

9. The device according to claims 1-8, wherein
the planar material (101) is selected from the group of materials comprising: foil, textile, formed fabric, paper, web, polymer netting, wire netting and gauze.

10. A utilization of a device according to claims 1-9, chosen from the list comprising:
polytunnel; roofing or protective wall for a market, sales or exhibition booth; protective roofing in the cultivation of ornamental or useful plants; shelter; carport; boat canopy; swimming pool cover or pool roofing; emergency accommodation; emergency garage; awning; protective sun canopy; shading; wind screen; hail protection; bird shelter; starling shelter; tent; party tent; pavilion; tool shed; storage room; roofing for aviaries or small animal playpens; pond cover; composter; fence; snow fence; snow guard and/or advertising medium for visual advertising, particularly outdoor advertising.

11. A method for manufacturing a device according to claims 1-9, comprising the steps of:
(a) providing a planar material (101);
(b) fastening at least one support element (20, 30, 50, 60, 70, 80, 90, 100) on the planar material (101), wherein the at least one support element (20, 30, 50, 60, 70, 80, 90, 100) comprises at least one shape memory polymer and has an essentially straight shape and/or is present in a temporary configuration of the at least one shape memory polymer;
(c) rolling up or folding together the planar material (101) provided with at least one support element (20, 30, 50, 60, 70, 80, 90, 100).

12. A device for the heat-induced transformation of at least one support element comprising a shape memory polymer from a first shape that corresponds to a permanent or a temporary configuration of the shape memory polymer into a second shape that accordingly corresponds to the temporary or the permanent configuration of the shape memory polymer, wherein the device comprises a first surface (75) comprising at least two swing doors (75) that can be pivoted relative to one another, wherein central surface normals of the two swing doors (75) include in a first position of the two swing doors (75) a first angle between one another or extend parallel to one another and the central surface normals of the two swing doors (75) extend in a second position of the two pivotable swing doors (75) parallel to one another or include a second angle between one another such that the support element, which can be inserted into a clamping device (76) on the two swing doors, can be heated to a temperature T that is greater than the transition temperature Tₜᵣₐₙₛ of the shape memory polymer by means of a hot air current and the support element can be transformed from the first shape into the second shape due to a temperature reduction by exerting a force that presses the swing doors (75) against a cool or cooled second surface (78) or wall (78).

13. A method for the heat-induced transformation of at least one support element (20, 30, 50, 60, 70, 80, 90, 100) of the device according to claims 1-11 from a first shape that corresponds to a permanent or a temporary configuration of the shape memory polymer into a second shape that accordingly corresponds to the temporary or the permanent configuration of the shape memory polymer, comprising at least the steps of:
(a) arranging a plurality of support elements (20, 30, 50, 60, 70, 80, 90, 100) on a first surface (75) in the form of a layer or in the form of a stack or in the form of a layered stack of support elements that are arranged on top of one another and/or adjacent to one another or separably connected to one another, wherein the first surface (75) comprises at least two partial surfaces (75) that can be pivoted relative to one another and the central surface normals of which include a first angle between one another or extend parallel to one another;
(b) raising the temperature of the shape memory polymer above its glass transition temperature or its softening temperature either indirectly by heating at least one of the partial surfaces (75) or by directly heating the plurality of support elements (20, 30, 50, 60, 70, 80, 90, 100);
(c) pivoting at least one of the two partial surfaces (75) relative to the other partial surface (75) in such a way that, unlike earlier, the central surface normals of the partial surfaces (75) now extend parallel to one another or include a second angle between one another which differs from the angle in preceding step (a);
(d) lowering the temperature of the shape memory polymer below its glass transition temperature or its crystallization temperature either indirectly by cooling at least one of the partial surfaces (75) or due to the contact of the plurality of support elements (20, 30, 50, 60, 70, 80, 90, 100) with a coolant or a cool or cooled second surface (78) or wall (78);
(e) removing the now transformed support elements (20, 30, 50, 60, 70, 80, 90, 100) from the layer or the stack.

## Revendications

1. Dispositif, comportant un matériau en feuille (101) et au moins un élément de maintien (20, 30, 50, 60, 70, 80, 90, 100) qui est relié au matériau en feuille (101), dans lequel le au moins un élément de maintien (20, 30, 50, 60, 70, 80, 90, 100) présente au moins un polymère à mémoire de forme de sorte que le dispositif présente une forme sensiblement plane dans une première configuration du au moins un polymère à mémoire de forme et
présente une forme sensiblement voûtée dans une seconde configuration du polymère à mémoire de forme.

2. Dispositif selon la revendication 1, dans lequel
la première configuration peut être transformée dans la seconde configuration par apport de chaleur.

3. Dispositif selon la revendication 1 ou 2, dans lequel
le au moins un élément de maintien (20, 30, 50, 60, 70, 80, 90, 100) présente un canal (33, 53), qui s'élargit à ses extrémités respectives en un raccord, qui est approprié pour une liaison par tuyau, raccordement, vissage, serrage, encliquetage, serrage ou sertissage.

4. Dispositif selon la revendication 1 à 3, dans lequel
la seconde configuration du polymère à mémoire de forme est induite par un fluide tempéré se trouvant dans le canal (33, 53), ou par un matériau électriquement conducteur chauffé dans le canal (33, 53).

5. Dispositif selon la revendication 1 à 4, dans lequel
le au moins un élément de maintien (20, 30, 50, 60, 70, 80, 90, 100) présente des cavités fermées.

6. Dispositif selon la revendication 1 à 5, dans lequel
le au moins un élément de maintien (20, 30, 50, 60, 70, 80, 90, 100) présente au moins par tronçon une section avec un contour fissuré et/ou une superficie fissurée de sorte que
l'échange de chaleur avec l'environnement est facilité, et/ou présente au moins par tronçon une ou plusieurs parties saillantes (21, 31, 51) ou bosses (21, 31, 51) se trouvant les unes derrière les autres dans le sens de la longueur, auxquelles sont opposés sensiblement diamétralement des creux (22, 32, 52), des renfoncements (22, 32, 52) ou des tranchées (22, 32, 52) sensiblement correspondants.

7. Dispositif selon la revendication 1 à 6, dans lequel
le au moins un élément de maintien (20, 30, 50, 60, 70, 80, 90, 100) présente au moins un moyen de fixation qui peut être relié à un moyen de fixation correspondant d'un second élément de maintien (20, 30, 50, 60, 70, 80, 90, 100).

8. Dispositif selon les revendications 1 à 7, dans lequel le polymère à mémoire de forme sélectionné et la structure interne de l'élément de maintien (20, 30, 50, 60, 70, 80, 90, 100) sont adaptés, de sorte que, dans le cas d'une intensité donnée du rayonnement solaire, l'élément de maintien (20, 30, 50, 60, 70, 80, 90, 100) est chauffé de sorte que le polymère à mémoire de forme de l'élément de maintien (20, 30, 50, 60, 70, 80, 90 100) prend sa seconde configuration et une élévation et/ou un gonflement et/ou un dépliage autonome du dispositif se produit.

9. Dispositif selon les revendications 1 à 8, dans lequel
le matériau en feuille (101) est sélectionné à partir du groupe de matériaux, comportant : la feuille, le textile, l'intissé, le papier, le filé, le filet polymère, la toile, la gaze.

10. Utilisation d'un dispositif selon les revendications 1 à 9, sélectionné à partir de la liste comportant :
une serre-tunnel ; un auvent ou une paroi de protection pour un stand de marché, de vente ou de foire ; un toit de protection pour la culture de plantes d'ornement ou utiles ; un abri ; un carport ; une bâche pour bateaux ; une couverture de piscine ou un abri de piscine ; un hébergement de fortune ; un garage de fortune ; une marquise; un pare-soleil ; un ombrage, un paravent, une protection antigrêle ; une protection contre les oiseaux ; une protection contre les étourneaux ; une tente ; un chapiteau ; un pavillon ; une cabane à outils ; une zone de rangement ; un toit pour une volière ou un enclos pour les petits animaux ; une couverture d'étang ; un composteur ; une clôture ; un écran paraneige, une grille à neige, et/ou un support publicitaire pour une publicité visuelle, en particulier une publicité extérieure.

11. Procédé de fabrication d'un dispositif selon les revendications 1 à 9, comportant les étapes consistant à :
(a) la préparation d'un matériau en feuille (101);
(b) la fixation au moins d'un élément de maintien (20, 30, 50, 60, 70, 80, 90, 100) au matériau en feuille (101), dans lequel le au moins un élément de maintien (20, 30, 50, 60, 70, 80, 90, 100) comporte un polymère à mémoire de forme et présente une forme sensiblement droite et/ou existe dans une configuration temporaire du au moins un polymère à mémoire de forme ;
(c) l'enroulement ou le repliage du matériau en feuille (101) prévu avec au moins un élément de maintien (20, 30, 50, 60, 70, 80, 90, 100).

12. Dispositif pour la transformation induite par chaleur d'au moins un élément de maintien comportant un polymère à mémoire de forme, à partir d'une première forme, qui correspond à une configuration permanente ou temporaire du polymère à mémoire de forme, dans une seconde forme, qui correspond par conséquent à la configuration temporaire ou permanente auteur du polymère à mémoire de forme, dans lequel le dispositif comprend une première surface (75), qui présente au moins deux portes battantes (75) oscillantes l'une par rapport à l'autre, dans lequel des normales à la surface moyennes des deux portes battantes (75), dans une première position des deux portes battantes (75), forment conjointement un premier angle ou s'étendent parallèlement l'une à l'autre et dans lequel, dans au moins une seconde position des deux portes battantes oscillantes l'une par rapport à l'autre (75), les normales à la surface moyennes des deux portes battantes (75) s'étendent parallèlement l'une à l'autre et ensuite forment conjointement un deuxième angle, de sorte que l'élément de maintien inséré dans un dispositif de serrage (76) sur les deux portes battantes peut être chauffé par un flux d'air chaud à une température T, qui est supérieure à la température de transition Tₜᵣₐₙₛ du polymère à mémoire de forme, et dans le cas de l'application d'une force poussant les portes battantes (75) contre une seconde surface (78) ou paroi (78) froide ou refroidie, l'élément de maintien peut passer de la première forme à la seconde forme par abaissement de la température.

13. Procédé pour la transformation induite par chaleur d'au moins un élément de maintien (20, 30, 50, 60, 70, 80, 90, 100) du dispositif selon les revendications 1 à 11, à partir d'une première forme, qui correspond à la configuration permanente ou temporaire du polymère à mémoire de forme, dans une seconde forme qui correspond par conséquent à la configuration temporaire ou permanente du polymère à mémoire de forme, comportant au moins les étapes consistant à :
(a) disposer une pluralité d'éléments de maintien (20, 30, 50, 60, 70, 80, 90, 100) sous la forme de couche ou de pile ou d'empilement de couches d'éléments de maintien disposés l'un sur l'autre et/ou l'un à côté de l'autre ou reliés les uns aux autres de manière détachable selon une forme donnée sur une première surface (75), dans lequel la première surface (75) présente au moins deux surfaces partielles oscillantes l'une par rapport à l'autre (75), dont les normales à la surface moyennes forment conjointement un premier angle ou s'étendent parallèlement l'une par rapport à l'autre ;
(b) augmenter la température du polymère à mémoire de forme au-dessus de sa température de transition vitreuse ou de sa température de ramollissement, soit indirectement par chauffage d'au moins une des surfaces partielles (75), soit par réchauffement immédiat de la pluralité d'éléments de maintien (20, 30, 50, 60, 70, 80, 90, 100) ;
(c) faire osciller au moins une des deux surfaces partielles (75) par rapport à l'autre surface partielle (75) de sorte que les normales à la surface moyennes des surfaces partielles (75), contrairement à avant, s'étendent parallèlement l'une par rapport à l'autre ou forment conjointement un second angle, qui s'écarte de celui de l'étape de procédé précédente (a) ;
(d) abaisser la température du polymère à mémoire de forme sous sa température de transition vitreuse ou sa température de cristallisation, soit indirectement par refroidissement d'au moins une des surfaces partielles (75) ou par contact de la pluralité d'éléments de maintien (20, 30, 50, 60, 70, 80, 90, 100) avec un moyen de refroidissement ou une seconde surface (78) ou paroi (78) froide ou refroidie ;
(e) l'enlèvement des éléments de maintien à présent transformés (20, 30, 50, 60, 70, 80, 90, 100) à partir de la couche ou de la pile.
